# EUROPEAN PATENT APPLICATION

(11) **EP 4 549 183 A1**
(43) Date of publication of application: **07.05.2025**
(21) Application number: 23829668.5
(22) Date of filing: 26.04.2023
(51) Int. Cl.: B60H 1/00, B60L 58/26, H01M 10/615

(54) **THERMAL MANAGEMENT SYSTEM AND VEHICLE HAVING SAME**

(30) Priority: 29.06.2022 CN 202210750541
(71) Applicant: BYD Company Limited, Shenzhen, Guangdong 518118 (CN)
(72) Inventor: WANG, Xuechao, Shenzhen, Guangdong 518118 (CN); ZHANG, Junyan, Shenzhen, Guangdong 518118 (CN); ZHAO, Shangzhong, Shenzhen, Guangdong 518118 (CN); TANG, Yifeng, Shenzhen, Guangdong 518118 (CN)
(74) Representative: Mathys & Squire
(86) International application number: PCT/CN2023/090911
(87) International publication number: WO 2024/001481

(57) **Abstract**

A thermal management system (100) and a vehicle having same. The thermal management system (100) comprises a compressor (1), at least one heat releasable flow channel (40), at least one heat absorbable flow channel (50), and a battery thermal management flow channel (60). The heat releasable flow channel (40) comprises a heat release portion (41). A third inlet (511) of a throttling device (51) is optionally communicated with or blocked from a second outlet (412) of the heat release portion (41), a third outlet (512) of the throttling device (51) is connected to a fourth inlet (521) of a heat absorption portion (52), and a fourth outlet (522) of the heat absorption portion (52) is connected to a first inlet (11) of the compressor (1). A fifth inlet (233) of a battery throttling device (23) is optionally communicated with a first outlet (12) of the compressor (1) or the second outlet (412) of the heat release portion (41), and a fifth outlet (234) of the battery throttling device (23) is connected to a sixth inlet (211) of a battery direct cooling plate (21). A sixth outlet (212) of the battery direct cooling plate (21) is optionally communicated with the third inlet (511) of the throttling device (51) or the first inlet (11) of the compressor (1). The battery throttling device (23) is switched between a full-open state and a throttling state.

## Description

### CROSS-REFERENCE TO RELATED APPLICATIONS

The present disclosure claims priority to and benefits of Chinese Patent Application No. "202210750541.0", filed by the BYD Co., Ltd. on June 29, 2022 and entitled "THERMAL MANAGEMENT SYSTEM AND VEHICLE HAVING SAME". The entire content of the above-referenced application is incorporated herein by reference.

### FIELD

The present disclosure relates to the field of vehicle technologies, and in particular, to a thermal management system and a vehicle having the same.

### BACKGROUND

In the related art, the undiversified operation mode of a thermal management system in a vehicle cannot well satisfy a user requirement. In addition, during use of the vehicle, the temperature of a battery pack of the vehicle cannot be effectively adjusted, resulting in a decrease in the battery life of the battery pack, and affecting the service life of the battery pack. In addition, power consumption of existing thermal management systems is high during operating, and thermal sources of the vehicle cannot be fully used, resulting in a power waste.

### SUMMARY

The present disclosure is intended to resolve at least one of the technical problems existing in the related art. Therefore, an objective of the present disclosure is to provide a thermal management system, so that diversity of operation modes of the thermal management system can be increased, thereby better satisfying a user requirement, and improving both a battery life and a service life of a battery pack.

Another objective of the present disclosure is to propose a vehicle to which the thermal management system is applied.

A thermal management system according to an embodiment of a first aspect of the present disclosure includes a compressor; at least one heat-releasing flow path, each heat-releasing flow path including a heat-releasing member, and a second inlet of the heat-releasing member being connected to a first outlet of the compressor; and at least one heat-absorbing flow path, each heat-absorbing flow path including a throttling apparatus and a heat-absorbing member, a third inlet of the throttling apparatus being selectively communicated with or cut off from a second outlet of the heat-releasing member, a third outlet of the throttling apparatus being connected to a fourth inlet of the heat-absorbing member, and a fourth outlet of the heat-absorbing member being connected to a first inlet of the compressor; and a battery thermal management flow path, the battery thermal management flow path including a battery throttling apparatus and a battery direct-cooling plate, a fifth inlet of the battery throttling apparatus being selectively communicated with the first outlet of the compressor or the second outlet of the heat-releasing member, a fifth outlet of the battery throttling apparatus being connected to a sixth inlet of the battery direct-cooling plate, and a sixth outlet of the battery direct-cooling plate selectively being communicated with the third inlet of the throttling apparatus or the first inlet of the compressor. The battery throttling apparatus is switchable between a full-open state and a throttling state.

According to the thermal management system in this embodiment of the present disclosure, the fifth inlet of the battery throttling apparatus is selectively communicated with the first outlet of the compressor or the second outlet of the heat-releasing member, and the third outlet of the battery throttling apparatus is connected to the inlet of the battery direct-cooling plate, so that the outlet of the battery direct-cooling plate is selectively communicated with the third inlet of the throttling apparatus or the first inlet of the compressor, and the battery throttling apparatus is switchable between the full-open state and the throttling state. Therefore, in comparison with a conventional thermal management system, during use of a vehicle, a temperature of a battery pack of the vehicle can be effectively adjusted, so that both a battery life and a service life of the battery pack can be extended.

In an embodiment, the heat-absorbing flow path includes a first heat-absorbing flow path. A first throttling apparatus and an indoor vaporizer are sequentially connected in series on the first heat-absorbing flow path. A seventh inlet of the first throttling apparatus is connected to the second outlet of the heat-releasing member, and an eighth outlet of the indoor vaporizer is connected to the first inlet of the compressor.

In an embodiment, the battery thermal management flow path includes a battery direct-cooling branch and a first battery heat-absorbing branch. A ninth inlet of the battery direct-cooling branch and a tenth inlet of the first battery heat-absorbing branch are both connected to the sixth outlet of the battery direct-cooling plate, a ninth outlet of the battery direct-cooling branch is connected to the first inlet of the compressor, and a tenth outlet of the first battery heat-absorbing branch is connected to the seventh inlet of the first throttling apparatus. The sixth outlet of the battery direct-cooling plate is selectively communicated with or cut off from the first inlet of the compressor through the battery direct-cooling branch, and the sixth outlet of the battery direct-cooling plate is selectively communicated with or cut off from the seventh inlet of the first throttling apparatus through the first battery heat-absorbing branch.

In an embodiment, the heat-absorbing flow path includes a second heat-absorbing flow path. A second throttling apparatus and an outdoor heat exchanger are sequentially connected in series on the second heat-absorbing flow path. An eleventh inlet of the second throttling apparatus is connected to the sixth outlet of the battery direct-cooling plate, and a twelfth outlet of the outdoor heat exchanger is connected to the first inlet of the compressor.

In an embodiment, the battery thermal management flow path includes a battery direct-cooling branch and a second battery heat-absorbing branch. The ninth inlet of the battery direct-cooling branch and a thirteenth inlet of the second battery heat-absorbing branch are both connected to the sixth outlet of the battery direct-cooling plate, the ninth outlet of the battery direct-cooling branch is connected to the first inlet of the compressor, and a thirteenth outlet of the second battery heat-absorbing branch is connected to the eleventh inlet of the second throttling apparatus. The sixth outlet of the battery direct-cooling plate is selectively communicated with or cut off from the first inlet of the compressor through the battery direct-cooling branch, and the sixth outlet of the battery direct-cooling plate is selectively communicated with or cut off from the eleventh inlet of the second throttling apparatus through the second battery heat-absorbing branch.

In an embodiment, the heat-absorbing flow path includes a third heat-absorbing flow path. A third throttling apparatus and a water-path heat exchanger are sequentially connected in series on the third heat-absorbing flow path. A fourteenth inlet of the third throttling apparatus is connected to the sixth outlet of the battery direct-cooling plate, and a fifteenth outlet of the water-path heat exchanger is connected to the first inlet of the compressor.

In an embodiment, the battery thermal management flow path includes a battery direct-cooling branch and a third battery heat-absorbing branch. The ninth inlet of the battery direct-cooling branch and a sixteenth inlet of the third battery heat-absorbing branch are both connected to the sixth outlet of the battery direct-cooling plate, the ninth outlet of the battery direct-cooling branch is connected to the first inlet of the compressor, and a sixteenth outlet of the third battery heat-absorbing branch is connected to the fourteenth inlet of the third throttling apparatus. The outlet of the battery direct-cooling plate is selectively communicated with or cut off from the first inlet of the compressor through the battery direct-cooling branch, and the sixth outlet of the battery direct-cooling plate is selectively communicated with or cut off from the fourteenth inlet of the third throttling apparatus through the third battery heat-absorbing branch.

In an embodiment, the water-path heat exchanger includes a first interface, a second interface, a third interface, and a fourth interface. The first interface is connected to the first inlet of the compressor, and the second interface is communicated with a fourteenth outlet of the third throttling apparatus. The thermal management system further includes an engine water path. The engine water path includes an engine. A water inlet of the engine is communicated with the third interface, and a water outlet of the engine is communicated with the fourth interface.

In an embodiment, the engine water path includes a control valve, the control valve including a first valve port, a second valve port, a third valve port, and a fourth valve port, the first valve port being connected to the water inlet, the second valve port being connected to the water outlet, and the third valve port being connected to the third interface of the water-path heat exchanger, where when one of the first valve port and the third valve port is communicated with one of the second valve port and the fourth valve port, the other of the first valve port and the third valve port is communicated with the other of the second valve port and the fourth valve port; a pump, the pump being located between the water-path heat exchanger and the engine; and a warm air core, one end of the warm air core being connected to the water outlet, and the other end of the warm air core being connected to the fourth interface of the water-path heat exchanger.

In an embodiment, the engine water path further includes a heating element. One end of the heating element is connected to the fourth interface of the water-path heat exchanger, and the other end of the heating element is connected to the pump.

In an embodiment, the engine water path further includes an exhaust gas and residual heat recovery apparatus. The recovery apparatus is arranged between the warm air core and the pump.

In an embodiment, the thermal management system further includes a third heat exchanger. The third heat exchanger includes a first port, a second port, a third port, and a fourth port. The third heat exchanger is connected in series on a system thermal management flow path through the first port and the fourth port, and the third heat exchanger is selectively connected in series to an air conditioning thermal management flow path and the battery thermal management flow path through the second port and the third port.

In an embodiment, the engine water path further includes a cutoff valve and an engine radiator connected in parallel. The cutoff valve and the engine radiator are arranged between the control valve and the engine.

In an embodiment, the heat-releasing flow path includes a first heat-releasing flow path. The first heat-releasing flow path includes an indoor condenser, and the indoor condenser is connected between the compressor and the battery throttling apparatus.

In an embodiment, the heat-releasing flow path includes a second heat-releasing flow path. The second heat-releasing flow path includes the outdoor heat exchanger, and the outdoor heat exchanger is connected between the compressor and the battery throttling apparatus.

In an embodiment, the heat-absorbing flow path includes a first heat-absorbing flow path. A first throttling apparatus and an indoor vaporizer are sequentially connected in series on the first heat-absorbing flow path. A seventh inlet of the first throttling apparatus is connected to the second outlet of the heat-releasing member, and an eighth outlet of the indoor vaporizer is connected to the first inlet of the compressor. The heat-releasing flow path includes a second heat-releasing flow path. The second heat-releasing flow path includes an outdoor heat exchanger, and the outdoor heat exchanger is connected between the compressor and the battery throttling apparatus. The second heat-releasing flow path is communicated with the first heat-absorbing flow path.

In an embodiment, the heat-absorbing flow path includes a first heat-absorbing flow path. A first throttling apparatus and an indoor vaporizer are sequentially connected in series on the first heat-absorbing flow path. A seventh inlet of the first throttling apparatus is connected to the second outlet of the heat-releasing member, and an eighth outlet of the indoor vaporizer is connected to the first inlet of the compressor. The heat-releasing flow path includes a first heat-releasing flow path. The first heat-releasing flow path includes an indoor condenser, and the indoor condenser is connected between the compressor and the battery throttling apparatus. The first heat-releasing flow path is communicated with the first heat-absorbing flow path.

In an embodiment, the heat-releasing flow path includes a first heat-releasing flow path. The first heat-releasing flow path includes an indoor condenser, and the indoor condenser is connected between the compressor and the battery throttling apparatus. The heat-absorbing flow path includes a second heat-absorbing flow path. A second throttling apparatus and an outdoor heat exchanger are sequentially connected in series on the second heat-absorbing flow path. An eleventh inlet of the second throttling apparatus is connected to the sixth outlet of the battery direct-cooling plate, and a twelfth outlet of the outdoor heat exchanger is connected to the first inlet of the compressor. The first heat-releasing flow path is communicated with the second heat-absorbing flow path.

In an embodiment, the heat-releasing flow path includes a first heat-releasing flow path. The first heat-releasing flow path includes an indoor condenser, and the indoor condenser is connected between the compressor and the battery throttling apparatus. The heat-absorbing flow path includes a third heat-absorbing flow path. A third throttling apparatus and a water-path heat exchanger are sequentially connected in series on the third heat-absorbing flow path. A fourteenth inlet of the third throttling apparatus is connected to the sixth outlet of the battery direct-cooling plate, and a fifteenth outlet of the water-path heat exchanger is connected to the first inlet of the compressor. The first heat-releasing flow path is communicated with the third heat-absorbing flow path.

In an embodiment, the heat-releasing flow path includes a first heat-releasing flow path, the first heat-releasing flow path including an indoor condenser, and the indoor condenser being connected between the compressor and the battery throttling apparatus; and a second heat-releasing flow path, the second heat-releasing flow path including an outdoor heat exchanger, and the outdoor heat exchanger being connected between the compressor and the battery throttling apparatus. The battery thermal management flow path, the first heat-releasing flow path, and the second heat-releasing flow path share a first common segment, and a seventeenth inlet of the first common segment is connected to the first outlet of the compressor. The battery thermal management flow path and the first heat-releasing flow path share a first branch segment, the second heat-releasing flow path has a second branch segment, and an eighteenth inlet of the first branch segment and a nineteenth inlet of the second branch segment are both connected to a seventeenth outlet of the first common segment. The battery thermal management flow path, the first heat-releasing flow path, and the second heat-releasing flow path share a second common segment, and an eighteenth outlet of the first branch segment and a nineteenth outlet of the second branch segment are both connected to a twentieth inlet of the second common segment. The seventeenth outlet of the first common segment is selectively communicated with the twentieth inlet of the second common segment through the first branch segment or the second branch segment.

In an embodiment, the heat-absorbing flow path includes a second heat-absorbing flow path. A second throttling apparatus and an outdoor heat exchanger are sequentially connected in series on the second heat-absorbing flow path. An eleventh inlet of the second throttling apparatus is connected to the sixth outlet of the battery direct-cooling plate, and a twelfth outlet of the outdoor heat exchanger is connected to the first inlet of the compressor. The second heat-absorbing flow path and the second branch segment share a third common segment. The second heat-absorbing flow path further includes a front segment of the second heat-absorbing flow path and a rear segment of the second heat-absorbing flow path. A twenty-first inlet of the front segment of the second heat-absorbing flow path is connected to a twentieth outlet of the second common segment, and a twenty-second outlet of the rear segment of the second heat-absorbing flow path is connected to the first inlet of the compressor. The second branch segment further includes a front segment of the second branch segment and a rear segment of the second branch segment. A twenty-third inlet of the front segment of the second branch segment is connected to the seventeenth outlet of the first common segment, and a twenty-fourth outlet of the rear segment of the second branch segment is connected to the twentieth inlet of the second common segment. The twenty-first outlet of the front segment of the second heat-absorbing flow path is separately connected to a twenty-fourth inlet of the rear segment of the second branch segment and one end of the third common segment, and a twenty-second inlet of the rear segment of the second heat-absorbing flow path is separately connected to a twenty-third outlet of the front segment of the second branch segment and the other end of the third common segment. Alternatively, the twenty-first outlet of the front segment of the second heat-absorbing flow path is separately connected to the twenty-third outlet of the front segment of the second branch segment and the end of the third common segment, and the twenty-second inlet of the rear segment of the second heat-absorbing flow path is separately connected to the twenty-fourth inlet of the rear segment of the second branch segment and the other end of the third common segment.

In an embodiment, a liquid storage tank is arranged in the second common segment.

In an embodiment, the thermal management system further includes a coaxial tube heat exchanger. The coaxial tube heat exchanger includes a first channel and a second channel, and the first channel is sleeved outside the second channel. The first channel includes a first port and a second port, and the second channel includes a third port and a fourth port. The first port is communicated with the twentieth outlet of the second common segment. The second port separately is communicated with the fifth inlet of the battery throttling apparatus and the seventh inlet of the first throttling apparatus. The third port is communicated with the sixth outlet of the battery direct-cooling plate. The fourth port is communicated with the first inlet of the compressor.

A vehicle according to an embodiment of a second aspect of the present disclosure includes the thermal management system in the embodiment of the first aspect of the present disclosure.

Additional aspects and advantages of the present disclosure are partially given in the following descriptions, some of which will become apparent from the following descriptions or may be learned from practices of the present disclosure.

### BRIEF DESCRIPTION OF THE DRAWINGS

The foregoing and/or additional aspects and advantages of the present disclosure will become apparent and comprehensible in the following descriptions of embodiments with reference to the following accompanying drawings.
FIG. 1 is a schematic diagram of a thermal management system according to an embodiment of the present disclosure;
FIG. 2 is a schematic diagram of the thermal management system shown in FIG. 1 in a first cooling mode;
FIG. 3 is a schematic diagram of the thermal management system shown in FIG. 1 in a second cooling mode;
FIG. 4 is a schematic diagram of the thermal management system shown in FIG. 1 in a third cooling mode;
FIG. 5 is a schematic diagram of the thermal management system shown in FIG. 1 in a first heating mode;
FIG. 6 is a schematic diagram of the thermal management system shown in FIG. 1 in a second heating mode;
FIG. 7 is a schematic diagram of the thermal management system shown in FIG. 1 in a third heating mode;
FIG. 8 is a schematic diagram of the thermal management system shown in FIG. 1 in a fourth heating mode;
FIG. 9 is a schematic diagram of the thermal management system shown in FIG. 1 in a fifth heating mode;
FIG. 10 is a schematic diagram of the thermal management system shown in FIG. 1 in a sixth heating mode;
FIG. 11 is a schematic diagram of the thermal management system shown in FIG. 1 in a seventh heating mode;
FIG. 12 is a schematic diagram of the thermal management system shown in FIG. 1 in an eighth heating mode;
FIG. 13 is a schematic diagram of the thermal management system shown in FIG. 1 in a ninth heating mode;
FIG. 14 is a schematic diagram of the thermal management system shown in FIG. 1 in a tenth heating mode;
FIG. 15 is a schematic diagram of a thermal management system according to another embodiment of the present disclosure;
FIG. 16 is a schematic diagram of the thermal management system in the embodiment shown in FIG. 15 in a first dehumidification mode;
FIG. 17 is a schematic diagram of the thermal management system in the embodiment shown in FIG. 15 in a second dehumidification mode;
FIG. 18 is a schematic diagram of the thermal management system in the embodiment shown in FIG. 15 in a defrosting mode;
FIG. 19 is a schematic diagram of a thermal management system according to still another embodiment of the present disclosure;
FIG. 20 is a schematic diagram of a heat-releasing flow path and a heat-absorbing flow path in a thermal management system according to an embodiment of the present disclosure;
FIG. 21 is a schematic diagram of a battery thermal management flow path when the thermal management system shown in FIG. 1 is in the ninth heating mode;
FIG. 21A is a schematic diagram of a vehicle according to an embodiment of the present disclosure;
FIG. 22 is a schematic diagram of a battery thermal management flow path when the thermal management system shown in FIG. 1 is in a tenth heating mode; and
FIG. 23 is a schematic diagram of an engine water path in the thermal management system shown in FIG. 1.

In the drawings:
100: thermal management system; 200: vehicle;
1: compressor; 11: first inlet; 12: first outlet; 2: indoor condenser; 3: first solenoid valve; 4: second solenoid valve; 5: outdoor heat exchanger; 52: twelfth outlet; 6: one-way valve; 7: liquid storage tank; 8: third solenoid valve; 9: first throttling apparatus; 91: seventh inlet; 10: indoor vaporizer; 102: eighth outlet; 11: engine; 111: water inlet; 112: water outlet; 12: control valve; A: first valve port; B: second valve port; C: third valve port; D: fourth valve port; 13: pump; 14: heating element; 15: fourth solenoid valve; 16: third throttling apparatus; 162: fourteenth outlet; 17: water-path heat exchanger; 172: fifteenth outlet; E: first interface; F: second interface; G: third interface; H: fourth interface; 18: fifth solenoid valve; 19: second throttling apparatus; 191: eleventh inlet; 20: engine radiator; 21: battery direct-cooling plate; 211: sixth inlet; 212: sixth outlet; 22: sixth solenoid valve; 23: battery throttling apparatus; 231: seventh solenoid valve; 232: fourth throttling apparatus; 233: fifth inlet; 234: fifth outlet; 25: eighth solenoid valve; 26: warm air core; 27: cutoff valve; 28: exhaust gas and residual heat recovery apparatus; 29: coaxial tube heat exchanger; 291: first channel; 292: second channel; I: first port; J: second port; K: third port; L: fourth port; 30: ninth solenoid valve; 31: tenth solenoid valve; 32: eleventh solenoid valve; 40: heat-releasing flow path; 41: heat-releasing member; 411: second inlet; 412: second outlet; 42: first heat-releasing flow path; 43: second heat-releasing flow path; 431: second branch segment; 4311: nineteenth inlet; 4312: nineteenth outlet; 4313: front segment of the second branch segment; 4314: rear segment of the second branch segment; 4315: twenty-third inlet; 4316: twenty-third outlet; 4317: twenty-fourth inlet; 4318: twenty-fourth outlet; 50: heat-absorbing flow path; 51: throttling apparatus; 511: third inlet; 512: third outlet; 52: heat-absorbing member; 521: fourth inlet; 522: fourth outlet; 53: first heat-absorbing flow path; 54: second heat-absorbing flow path; 541: front segment of the second heat-absorbing flow path; 5411: twenty-first inlet; 5412: twenty-first outlet; 542: rear segment of the second heat-absorbing flow path; 5421: twenty-second inlet; 5422: twenty-second outlet; 55: third heat-absorbing flow path; 60: battery thermal management flow path; 601: battery direct-cooling branch; 6011: ninth inlet; 6012: ninth outlet; 602: first battery heat-absorbing branch; 6021: tenth inlet; 6022: tenth outlet; 603: second battery heat-absorbing branch; 6031: thirteenth inlet; 6032: thirteenth outlet; 604: third battery heat-absorbing branch; 6041: sixteenth inlet; 6042: sixteenth outlet; 605: first common segment; 6051: seventeenth inlet; 6052: seventeenth outlet; 606: first branch segment; 6061: eighteenth inlet; 6062: eighteenth outlet; 607: second common segment; 6071: twelfth inlet; 6072: twelfth outlet; 608: third common segment; and 70: engine water path.

### DETAILED DESCRIPTION

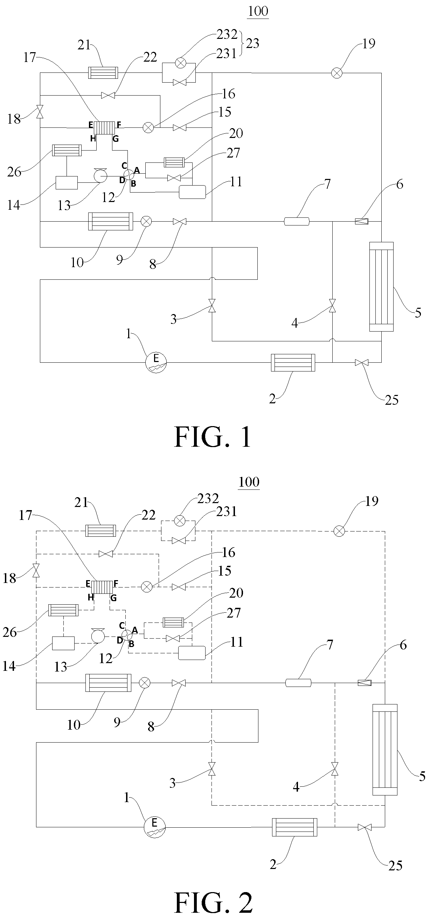

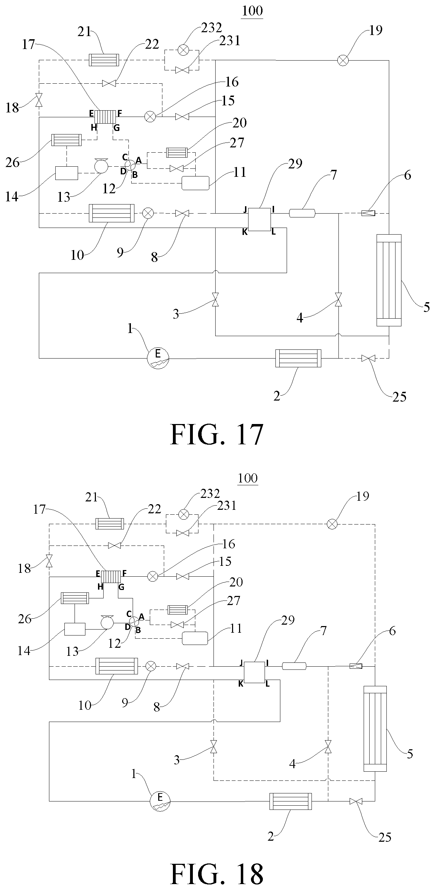

The following describes a thermal management system 100 in an embodiment of a first aspect of the present disclosure with reference to FIG. 1 to FIG. 23.

As shown in FIG. 1 to FIG. 23, the thermal management system 100 in the embodiment of the first aspect of the present disclosure includes a compressor 1, at least one heat-releasing flow path 40, at least one heat-absorbing flow path 50, and a battery thermal management flow path 60.

Specifically, each heat-releasing flow path 40 includes a heat-releasing member 41, and a second inlet 411 of the heat-releasing member 41 is connected to a first outlet 12 of the compressor 1. Each heat-absorbing flow path 50 includes a throttling apparatus 51 and a heat-absorbing member 52. A third inlet 511 of the throttling apparatus 51 is selectively communicated with or cut off from a second outlet 412 of the heat-releasing member 41. A third outlet 512 of the throttling apparatus 51 is connected to a fourth inlet 521 of the heat-absorbing member 52. A fourth outlet 522 of the heat-absorbing member 52 is connected to a first inlet 11 of the compressor 1. The battery thermal management flow path 60 includes a battery throttling apparatus 23 and a battery direct-cooling plate 21. A fifth inlet 233 of the battery throttling apparatus 23 is selectively communicated with the first outlet 12 of the compressor 1 or the second outlet 412 of the heat-releasing member 41. A fifth outlet 234 of the battery throttling apparatus 23 is connected to a sixth inlet 211 of the battery direct-cooling plate 21. A sixth outlet 212 of the battery direct-cooling plate 21 is selectively communicated with the third inlet 511 of the throttling apparatus 51 or the first inlet 11 of the compressor 1. The battery throttling apparatus 23 is switchable between a full-open state and a throttling state.

When the battery throttling apparatus 23 is in the throttling state, the battery throttling apparatus 23 is communicated with the second outlet 412 of the heat-releasing member 41, and the sixth outlet 212 of the battery direct-cooling plate 21 is communicated with the first inlet 11 of the compressor 1. In this case, a high-temperature refrigerant in the compressor 1 flows to the heat-releasing member 41, and the refrigerant releases heat in the heat-releasing member 41 to decrease a temperature of the refrigerant. The refrigerant whose temperature is decreased flows to the battery direct-cooling plate 21 via the battery throttling apparatus 23. The low-temperature refrigerant in the battery direct-cooling plate 21 performs heat exchange with a battery pack, to decrease a temperature of the battery pack and ensure normal operating of the battery pack. Then, the refrigerant after the heat exchange flows back to the compressor 1. This process is repeated, so that the temperature of the battery pack is decreased.

When the battery throttling apparatus 23 is in the full-open state, the fifth inlet 233 of the battery throttling apparatus 23 is communicated with the first outlet 12 of the compressor 1, and the sixth outlet 212 of the battery direct-cooling plate 21 is communicated with the third inlet 511 of the throttling apparatus 51 on the heat-absorbing flow path 50. In this case, a high-temperature refrigerant in the compressor 1 flows to the battery direct-cooling plate 21 via the battery throttling apparatus 23. The refrigerant in the battery direct-cooling plate 21 may perform heat exchange with a battery pack, to increase a temperature of the battery pack and ensure that the battery pack can normally operate when an environmental temperature is low. Then, the refrigerant after the heat exchange flows back to the compressor 1 via the throttling apparatus 51 and the heat-absorbing member 52. This process is repeated, so that the battery pack is heated.

According to the thermal management system 100 in this embodiment of the present disclosure, the fifth inlet 233 of the battery throttling apparatus 23 is selectively communicated with the first outlet 12 of the compressor 1 or the second outlet 412 of the heat-releasing member 41, and the fifth outlet 234 of the battery throttling apparatus 23 is connected to the sixth inlet 211 of the battery direct-cooling plate 21, so that the sixth outlet 212 of the battery direct-cooling plate 21 is selectively communicated with the third inlet 511 of the throttling apparatus 51 or the first inlet 11 of the compressor 1, and the battery throttling apparatus 23 is switchable between the full-open state and the throttling state. Therefore, in comparison with a conventional thermal management system, during use of a vehicle 200, a temperature of a battery pack of the vehicle 200 can be effectively adjusted, so that both a battery life and a service life of the battery pack can be extended.

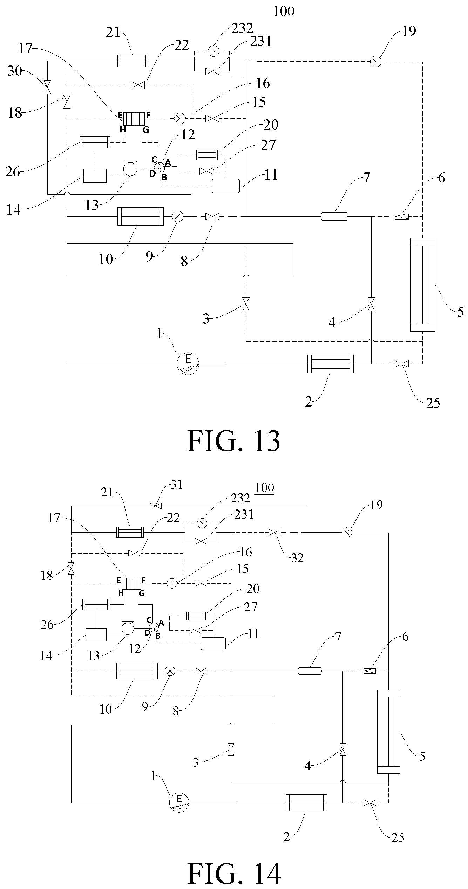

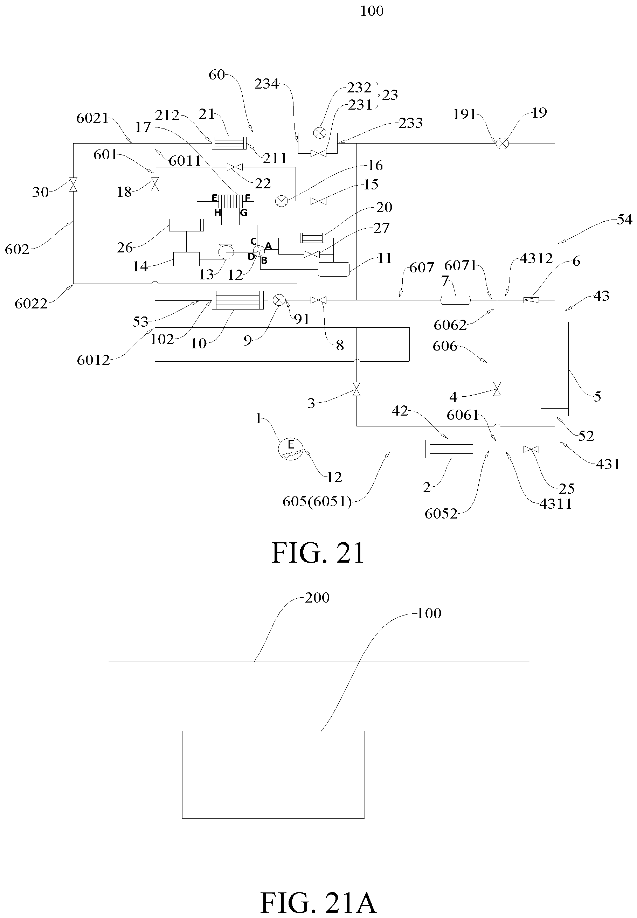

According to some embodiments of the present disclosure, the heat-absorbing flow path 50 includes a first heat-absorbing flow path 53. A first throttling apparatus 9 and an indoor vaporizer 10 are sequentially connected in series on the first heat-absorbing flow path 53. A seventh inlet 91 of the first throttling apparatus 9 is connected to the second outlet 412 of the heat-releasing member 41, and an eighth outlet 101 of the indoor vaporizer 10 is connected to the first inlet 11 of the compressor 1. Referring to FIG. 13 and FIG. 21, the thermal management system 100 is in a ninth heating mode. The battery throttling apparatus 23 is communicated with the first outlet 12 of the compressor 1, and the sixth outlet 212 of the battery direct-cooling plate 21 is communicated with the first inlet 11 of the compressor 1. The refrigerant in the compressor 1 flows to the battery direct-cooling plate 21 via the heat-releasing member 41 and the battery throttling apparatus 23. In this case, the heat-releasing member 41 does not operate, in other words, the heat-releasing member 41 does not perform heat exchange. The high-temperature refrigerant in the battery direct-cooling plate 21 may perform heat exchange with the low-temperature battery pack, to increase the temperature of the battery pack. The refrigerant after the heat exchange may flow to the indoor vaporizer 10 via the first throttling apparatus 9. The indoor vaporizer 10 vaporizes the refrigerant to absorb heat in a vehicle cabin, so as to decrease a temperature in the vehicle cabin. This process is repeated, so that the temperature in the vehicle cabin can be decreased when the battery pack is heated, thereby better satisfying a user requirement.

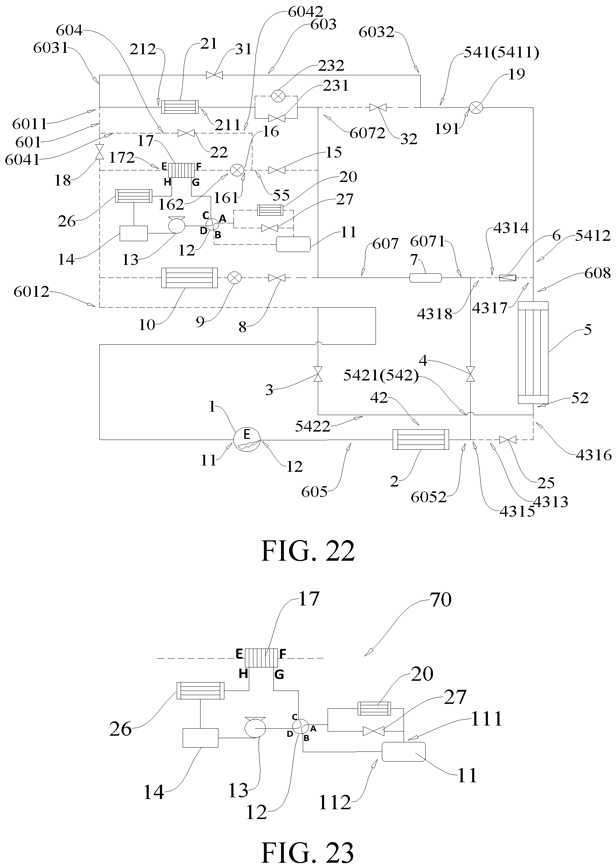

Further, with reference to FIG. 21 and FIG. 22, the battery thermal management flow path 60 includes a battery direct-cooling branch 601 and a first battery heat-absorbing branch 602. A ninth inlet 6011 of the battery direct-cooling branch 601 and a tenth inlet 6021 of the first battery heat-absorbing branch 602 are both connected to the sixth outlet 212 of the battery direct-cooling plate 21. A ninth outlet 6012 of the battery direct-cooling branch 601 is connected to the first inlet 11 of the compressor 1, and a tenth outlet 6022 of the first battery heat-absorbing branch 602 is connected to the seventh inlet 91 of the first throttling apparatus 9. The sixth outlet 212 of the battery direct-cooling plate 21 is selectively communicated with or cut off from the first inlet 11 of the compressor 1 through the battery direct-cooling branch 601, and the sixth outlet 212 of the battery direct-cooling plate 21 is selectively communicated with or cut off from the seventh inlet 91 of the first throttling apparatus 9 through the first battery heat-absorbing branch 602.

As shown in FIG. 13 and FIG. 21, when the thermal management system 100 is in the ninth heating mode, the sixth outlet 212 of the battery direct-cooling plate 21 is communicated with the first inlet 11 of the compressor 1 through the battery direct-cooling branch 601, and the sixth outlet 212 of the battery direct-cooling plate 21 is in communication through the first battery heat-absorbing branch 602. A fifth solenoid valve 18 is connected in series on the battery direct-cooling branch 601. A ninth solenoid valve 30 is connected in series on the first battery heat-absorbing branch 602. In this case, both the fifth solenoid valve 18 and the ninth solenoid valve 30 are in an open state. Specifically, when the thermal management system 100 is in the ninth heating mode, the refrigerant in the compressor 1 flows to the battery direct-cooling plate 21 via the heat-releasing member 41 and the battery throttling apparatus 23. The high-temperature refrigerant in the battery direct-cooling plate 21 may perform heat exchange with the low-temperature battery pack, to increase the temperature of the battery pack. The refrigerant after the heat exchange flows out of the battery direct-cooling plate 21, and flows to the first throttling apparatus 9 via the ninth solenoid valve 30. After the refrigerant is throttled and the temperature of the refrigerant is decreased by the first throttling apparatus 9, the refrigerant flows to the indoor vaporizer 10, and is vaporized in the indoor vaporizer 10, to increase the temperature in the vehicle cabin. The vaporized refrigerant flows back to the compressor 1.

According to some embodiments of the present disclosure, with reference to FIG. 21 and FIG. 22, the heat-absorbing flow path 50 includes a second heat-absorbing flow path 54. A second throttling apparatus 19 and an outdoor heat exchanger 5 are sequentially connected in series on the second heat-absorbing flow path 54. An eleventh inlet 191 of the second throttling apparatus 19 is connected to the sixth outlet 212 of the battery direct-cooling plate 21. A twelfth outlet 52 of the outdoor heat exchanger 5 is connected to the first inlet 11 of the compressor 1. Referring to FIG. 14 and FIG. 22, when the thermal management system 100 is in a tenth heating mode, the refrigerant in the compressor 1 flows to the battery direct-cooling plate 21 via the heat-releasing member 41 and the battery throttling apparatus 23. In this case, the heat-releasing member 41 does not perform heat exchange, and the high-temperature refrigerant in the battery direct-cooling plate 21 performs heat exchange with the battery pack, to increase the temperature of the battery pack. The refrigerant after the heat exchange flows to the outdoor heat exchanger 5 via the second throttling apparatus 19. The refrigerant is vaporized in the outdoor heat exchanger 5 and then flows back to the compressor 1.

Further, with reference to FIG. 21 and FIG. 22, the battery thermal management flow path 60 includes a battery direct-cooling branch 601 and a second battery heat-absorbing branch 603. The inlet of the battery direct-cooling branch 601 and a thirteenth inlet 6031 of the second battery heat-absorbing branch 603 are both connected to the sixth outlet 212 of the battery direct-cooling plate 21. The ninth outlet 6012 of the battery direct-cooling branch 601 is connected to the first inlet 11 of the compressor 1. A thirteenth outlet 6032 of the second battery heat-absorbing branch 603 is connected to the eleventh inlet 191 of the second throttling apparatus 19. The sixth outlet 212 of the battery direct-cooling plate 21 is selectively communicated with or cut off from the first inlet 11 of the compressor 1 through the battery direct-cooling branch 601, and the sixth outlet 212 of the battery direct-cooling plate 21 is selectively communicated with or cut off from the eleventh inlet 191 of the second throttling apparatus 19 through the second battery heat-absorbing branch 603.

As shown in FIG. 14 and FIG. 22, when the thermal management system 100 is in the tenth heating mode, the sixth outlet 212 of the battery direct-cooling plate 21 is cut off from the first inlet 11 of the compressor 1, and the sixth outlet 212 of the battery direct-cooling plate 21 is communicated with the eleventh inlet 191 of the second throttling apparatus 19 through the second battery heat-absorbing branch 603. A tenth solenoid valve 31 is connected in series on the second battery heat-absorbing branch 603. The refrigerant in the compressor 1 flows to the battery direct-cooling plate 21 via the heat-releasing member 41 and the battery throttling apparatus 23, and the high-temperature refrigerant in the battery direct-cooling plate 21 performs heat exchange with the battery pack, to increase the temperature of the battery pack. The refrigerant after the heat exchange flows to the outdoor heat exchanger 5 via the tenth solenoid valve 31 and the second throttling apparatus 19. After the refrigerant is vaporized in the outdoor heat exchanger 5, the refrigerant flows back to the compressor 1 via a first solenoid valve 3. This process is repeated, so that the battery pack is heated.

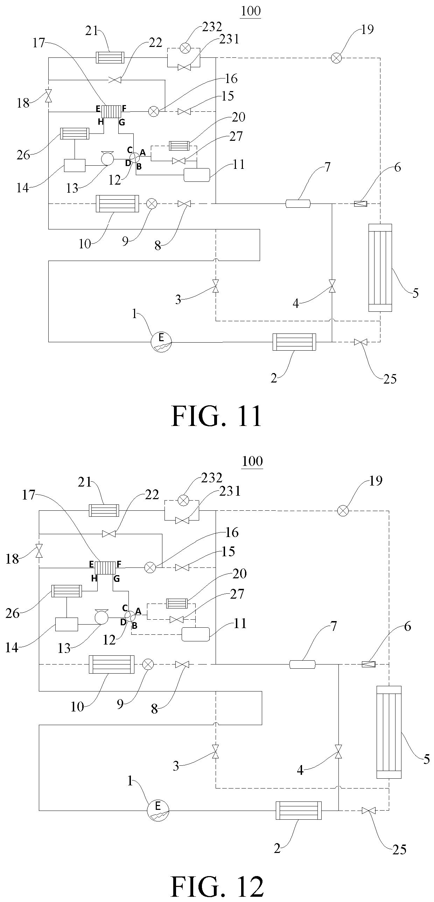

According to some embodiments of the present disclosure, with reference to FIG. 21 and FIG. 22, the heat-absorbing flow path 50 includes a third heat-absorbing flow path 55. A third throttling apparatus 16 and a water-path heat exchanger 17 are sequentially connected in series on the third heat-absorbing flow path 55. A fourteenth inlet 161 of the third throttling apparatus 16 is connected to the sixth outlet 212 of the battery direct-cooling plate 21, and a fifteenth outlet 172 of the water-path heat exchanger 17 is connected to the first inlet 11 of the compressor 1. As shown in FIG. 11 and FIG. 12, a sixth solenoid valve 22, the third throttling apparatus 16, and the water-path heat exchanger 17 are sequentially connected in series on the third heat-absorbing flow path 55. When the thermal management system 100 is in a seventh heating mode or an eighth heating mode, the refrigerant in the compressor 1 may flow to the battery direct-cooling plate 21 via an indoor condenser 2, a second solenoid valve 4, and a seventh solenoid valve 231 in the battery throttling apparatus 23. The indoor condenser 2 does not operate, and the high-temperature refrigerant may perform heat exchange with the battery pack through the battery direct-cooling plate 21, to increase the temperature of the battery pack. The battery throttling apparatus 23 includes the seventh solenoid valve 231 and a fourth throttling apparatus 232 that are connected in parallel. The refrigerant after the heat exchange may flow to the water-path heat exchanger 17 via the sixth solenoid valve 22 and the third throttling apparatus 16. The refrigerant in the water-path heat exchanger 17 performs heat exchange with water in the water-path heat exchanger 17. The refrigerant after the heat exchange flows back to the compressor 1, and the water after the heat exchange flows back to an engine 11. Heat of the engine 11 flows to the water-path heat exchanger 17 through the water on an engine water path 70.

It needs to be noted that the battery pack and the vehicle cabin may alternatively be heated simultaneously by using heat of the engine 11. In this case, a flow path of the refrigerant is the same as the flow path of the refrigerant when the thermal management system 100 operates in the seventh heating mode. The indoor condenser 2 operates. In other words, the indoor condenser 2 performs heat exchange, so that the temperature in the vehicle cabin can be increased. The refrigerant after the heat exchange flows to the battery direct-cooling plate 21. Usually, the temperature of the refrigerant after the heat exchange is still higher than the temperature of the battery pack, so that heat exchange can be performed with the battery pack through the battery direct-cooling plate 21, to increase the temperature of the battery pack. The heat of the engine 11 flows to the water-path heat exchanger 17 through the water on the engine water path 70.

Further, referring to FIG. 11, FIG. 12, FIG. 21, and FIG. 22, the battery thermal management flow path 60 includes a battery direct-cooling branch 601 and a third battery heat-absorbing branch 604. The inlet of the battery direct-cooling branch 601 and a sixteenth inlet 6041 of the third battery heat-absorbing branch 604 are both connected to the sixth outlet 212 of the battery direct-cooling plate 21. The ninth outlet 6012 of the battery direct-cooling branch 601 is connected to the first inlet 11 of the compressor 1. A sixteenth outlet 6042 of the third battery heat-absorbing branch 604 is connected to the fourteenth inlet 161 of the third throttling apparatus 16. The sixth outlet 212 of the battery direct-cooling plate 21 is selectively communicated with or cut off from the first inlet 11 of the compressor 1 through the battery direct-cooling branch 601, and the sixth outlet 212 of the battery direct-cooling plate 21 is selectively communicated with or cut off from the fourteenth inlet 161 of the third throttling apparatus 16 through the third battery heat-absorbing branch 604.

As shown in FIG. 11 and FIG. 12, when the thermal management system 100 is in the seventh heating mode or the eighth heating mode, the sixth outlet 212 of the battery direct-cooling plate 21 is cut off from the first inlet 11 of the compressor 1 through the battery direct-cooling branch 601, and the sixth outlet 212 of the battery direct-cooling plate 21 is communicated with the third throttling apparatus 16 through the third battery heat-absorbing branch 604. The sixth solenoid valve 22 is connected in the third battery heat-absorbing branch 604.

Further, the water-path heat exchanger 17 includes a first interface E, a second interface F, a third interface G, and a fourth interface H. The first interface E is connected to the first inlet 11 of the compressor 1, and the second interface F is communicated with a fourteenth outlet 162 of the third throttling apparatus 16. The thermal management system 100 further includes the engine water path 70. The engine water path 70 includes the engine 11. A water inlet 111 of the engine 11 is communicated with the third interface G, and a water outlet 112 of the engine 11 is communicated with the fourth interface H. During operating of the engine 11, the water on the engine water path 70 flows through the engine 11 to perform heat exchange with the engine 11, so as to increase a temperature of the water on the engine water path 70. The water whose temperature is increased flows through the water-path heat exchanger 17, and performs heat exchange with the refrigerant that flows through the water-path heat exchanger 17, so that the temperature of the refrigerant in the water-path heat exchanger 17 can be increased. Therefore, heat in the engine 11 can be used to heat the vehicle cabin, so that power consumption of the vehicle 200 can be effectively reduced.

According to some embodiments of the present disclosure, as shown in FIG. 1 to FIG. 14, and FIG. 23, the engine water path 70 includes a control valve 12, a pump 13, and a warm air core 26. The control valve 12 includes a first valve port A, a second valve port B, a third valve port C, and a fourth valve port D. The first valve port A is connected to the water inlet 111, the second valve port B is connected to the water outlet 112, and the third valve port C is connected to the third interface G of the water-path heat exchanger 17. When one of the first valve port A and the third valve port C is communicated with one of the second valve port B and the fourth valve port D, the other of the first valve port A and the third valve port C is communicated with the other of the second valve port B and the fourth valve port D. When the first valve port A is communicated with the second valve port B, the third valve port C is communicated with the fourth valve port D. Alternatively, when the first valve port A is communicated with the fourth valve port D, the third valve port C is communicated with the second valve port B. The pump 13 is located between the water-path heat exchanger 17 and the engine 11. One end of the warm air core 26 is connected to the other end of the pump 13, and the other end of the warm air core 26 is connected to the fourth interface H of the water-path heat exchanger 17.

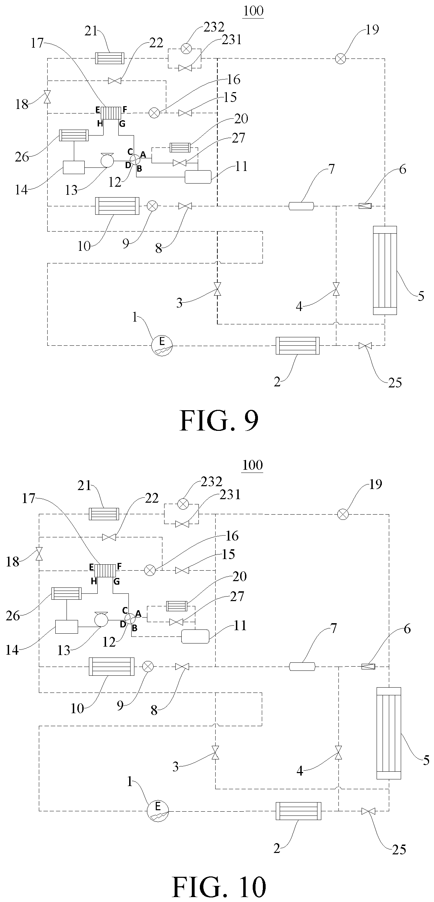

With reference to FIG. 9, the thermal management system 100 operates in a fifth heating mode, to be specific, only the engine water path 70 in the thermal management system 100 operates. In this case, the heat generated when the engine 11 operates is transferred to the water on the engine water path 70. The water whose temperature is increased may flow to the warm air core 26 via the water outlet 112, the second valve port B and the fourth valve port D of the control valve 12, and the pump 13. In this case, the warm air core 26 may transfer heat in the water to the vehicle cabin, to increase the temperature in the vehicle cabin. Then, the water in the warm air core 26 may flow back to the engine 11 via the water-path heat exchanger 17, the third valve port C and the first valve port A of the control valve 12, and the water inlet 111.

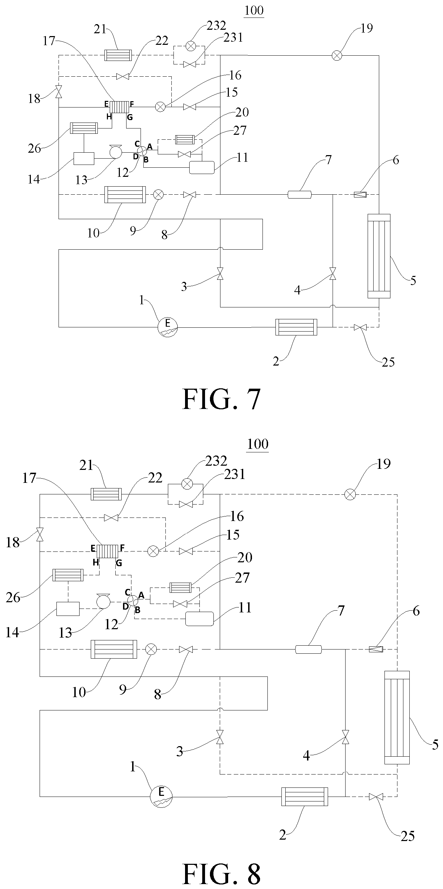

With reference to FIG. 7, the thermal management system 100 operates in a third heating mode. To be specific, the outdoor heat exchanger 5 absorbs heat in outside air, and the water-path heat exchanger 17 absorbs the heat of the engine 11, to heat the vehicle cabin. Specifically, the refrigerant in the compressor 1 flows to the indoor condenser 2, and the refrigerant is liquefied in the indoor condenser 2 and releases heat, to increase the temperature in the vehicle cabin. The liquefied refrigerant that flows out via the second solenoid valve 4 is divided into two parts. One part of the refrigerant flows to the outdoor heat exchanger 5 via the second throttling apparatus 19. The refrigerant may perform heat exchange with the outside air through the outdoor heat exchanger 5, and the refrigerant after the heat exchange flows back to the compressor 1 via the first solenoid valve 3. The other part of the refrigerant flows to the water-path heat exchanger 17 via a fourth solenoid valve 15 and the third throttling apparatus 16. In addition, after the water in the engine 11 performs heat exchange with the engine 11, the water flows to the water-path heat exchanger 17 via the water outlet 112, the second valve port B, the fourth valve port D, the pump 13, and the warm air core 26. In this case, the warm air core 26 does not operate, and the refrigerant in the water-path heat exchanger 17 performs heat exchange with the water. The refrigerant whose temperature is increased flows back to the compressor 1, and the water whose temperature is decreased flows back to the engine 11 via the third valve port C, the first valve port A, and the water inlet 111. This process is repeated, so that the heat in the outside air and the heat of the engine 11 can be effectively used to heat the vehicle cabin, and the temperature in the vehicle cabin can be quickly adjusted, thereby reducing the power consumption of the vehicle 200.

In some optional embodiments, as shown in FIG. 1 to FIG. 18, and FIG. 23, the engine water path 70 further includes a heating element 14. One end of the heating element 14 is connected to the fourth interface H of the water-path heat exchanger 17, and the other end of the heating element 14 is connected to the other end of the warm air core 26. With reference to FIG. 10, the thermal management system 100 operates in a sixth heating mode. In this case, only the engine water path 70 operates. The engine 11 does not operate. To be specific, the thermal management system 100 heats the vehicle cabin by using only heat of the heating element 14. For example, in an environment of an extremely low temperature, the heating element 14 may be directly turned on to heat the vehicle cabin. In this case, the heating element 14 may heat water in the heating element 14, and the heated water may flow to the water-path heat exchanger 17 via the warm air core 26. At least one of the warm air core 26 and the water-path heat exchanger 17 performs heat exchange with the water, to provide hot air to the vehicle cabin and increase the temperature in the vehicle cabin. The water after the heat exchange may flow back to the heating element 14 via the third valve port C and the fourth valve port D of the control valve 12 and the pump 13. This process is repeated, so that the vehicle cabin can be heated by using the heat of the heating element 14, to quickly increase the temperature in the vehicle cabin in the environment of an extremely low temperature. Optionally, the heating element 14 may be a PTC . However, this is not limited thereto.

With reference to FIG. 12, the thermal management system 100 operates in the eighth heating mode. In this case, the heating element 14 is turned on, the engine 11 does not operate. The heat of the heating element 14 is used to heat the battery pack. For example, when a gun is inserted into the vehicle 200, for example, a hybrid vehicle 200, for charging in a low-temperature environment, the battery pack needs to be heated. In this case, the second solenoid valve 4, the sixth solenoid valve 22, the seventh solenoid valve 231 are opened, a third solenoid valve 8, the fourth solenoid valve 15, the fifth solenoid valve 18, and an eighth solenoid valve 25 are closed, and the second throttling apparatus 19, the third throttling apparatus 16, and the fourth throttling apparatus 232 are turned off. The refrigerant in the compressor 1 flows to the battery direct-cooling plate 21 via the indoor condenser 2, the second solenoid valve 4, and the seventh solenoid valve 231. The indoor condenser 2 does not operate, and the refrigerant performs heat exchange with the battery pack through the battery direct-cooling plate 21, to increase the temperature of the battery pack. The refrigerant after the heat exchange flows to the water-path heat exchanger 17 via the sixth solenoid valve 22. In addition, the heating element 14 may heat the water in the heating element 14. The heated water may flow to the water-path heat exchanger 17 via the warm air core 26. The refrigerant in the water-path heat exchanger 17 performs heat exchange with the water in the water-path heat exchanger 17. The refrigerant whose temperature is increased flows back to the compressor 1, and the water whose temperature is decreased may flow back to the heating element 14 via the third valve port C and the fourth valve port D of the control valve 12 and the pump 13. This process is repeated, so that the battery pack can be heated by using the heat of the heating element 14 during charging in the low-temperature environment.

It needs to be noted that the vehicle cabin and the battery pack may alternatively be heated simultaneously by using the heat of the heating element 14. In this case, flow paths of the refrigerant and the water are the same as the flow paths of the refrigerant and the water when the thermal management system 100 operates in the eighth heating mode. The indoor condenser 2 operates, to be specific, the indoor condenser 2 performs heat exchange, to increase the temperature in the vehicle cabin. In addition, heat exchange is performed with the battery pack through the battery direct-cooling plate 21, to increase the temperature of the battery pack.

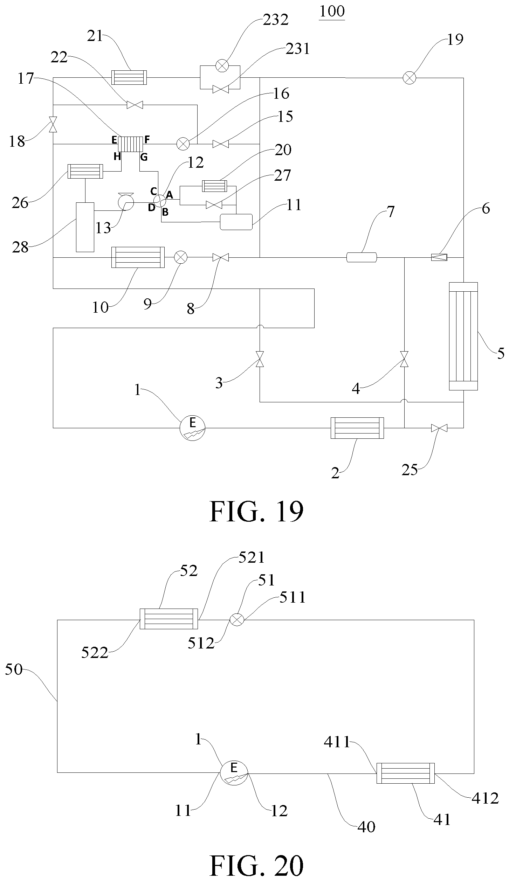

According to some other embodiments of the present disclosure, as shown in FIG. 19, the engine water path 70 further includes an exhaust gas and residual heat recovery apparatus 28. The exhaust gas and residual heat recovery apparatus 28 is arranged between the warm air core 26 and the pump 13. The exhaust gas and residual heat recovery apparatus 28 can recover heat in exhaust gas of the vehicle 200. In this case, the exhaust gas and residual heat recovery apparatus 28 can serve as the heating element 14 and can implement a heating function of the heating element 14, so that the thermal management system 100 can use the heat in the exhaust gas as much as possible to implement a cooling or heating function, thereby reducing the power consumption of the entire vehicle.

According to some embodiments of the present disclosure, referring to FIG. 21 to FIG. 23, the engine water path 70 further includes a cutoff valve 27 and an engine radiator 20 connected in parallel. The cutoff valve 27 and the engine radiator 20 are arranged between the control valve 12 and the engine 11. When the thermal management system 100 uses the heat of the engine 11, the cutoff valve 27 is opened, so that the water on the engine water path 70 can flow through the engine 11 and the water-path heat exchanger 17, to transfer the heat of the engine 11 to the water-path heat exchanger 17. When the thermal management system 100 does not use the heat of the engine 11, the cutoff valve 27 is closed, and the engine 11 may transfer the generated heat to the water on the engine water path 70. The water whose temperature is increased may flow to the engine radiator 20 via the second valve port B and the first valve port A of the control valve 12. The engine radiator 20 performs heat exchange with the outside air, to decrease the temperature of the water flowing through the engine radiator 20. The water whose temperature is decreased flows back to the engine 11. This process is repeated, so that the heat can be dissipated from the engine 11.

According to some embodiments of the present disclosure, with reference to FIG. 21 and FIG. 22, the heat-releasing flow path 40 includes a first heat-releasing flow path 42. The first heat-releasing flow path 42 includes an indoor condenser 2, and the indoor condenser 2 is connected between the compressor 1 and the battery throttling apparatus 23. With reference to FIG. 8, the thermal management system 100 operates in a fourth heating mode. In other words, the battery direct-cooling plate 21 serves as a vaporizer, and radiates heat from the battery pack when heating the vehicle cabin. Specifically, the refrigerant in the compressor 1 flows to the indoor condenser 2. The indoor condenser 2 can liquefy the refrigerant and release a large amount of heat, to increase the temperature in the vehicle cabin. The liquefied refrigerant may flow to the battery direct-cooling plate 21 via the second solenoid valve 4 and the battery throttling apparatus 23. The refrigerant in the battery direct-cooling plate 21 may perform heat exchange with the battery pack. When the temperature of the battery pack is decreased, the refrigerant in the battery direct-cooling plate 21 is vaporized, and the vaporized refrigerant flows back to the compressor 1 via the fifth solenoid valve 18. This process is repeated, so that when the temperature of the battery pack is decreased, the vehicle cabin can also be heated.

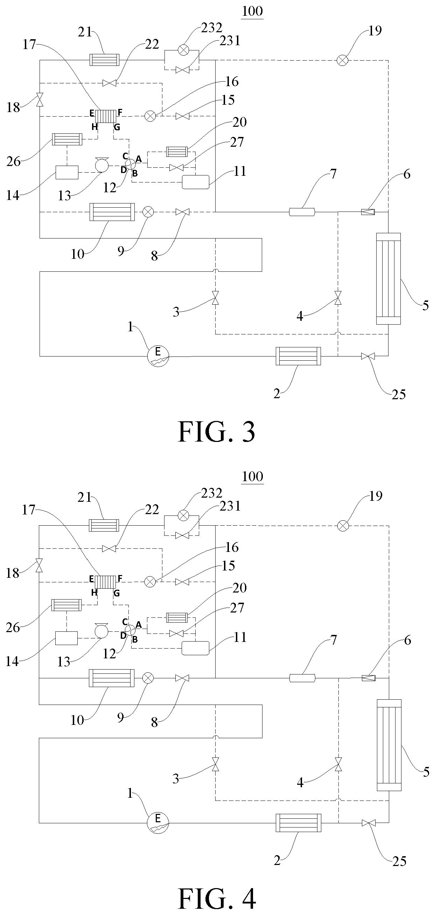

According to some embodiments of the present disclosure, with reference to FIG. 21 and FIG. 22, the heat-releasing flow path 40 includes a second heat-releasing flow path 43. The second heat-releasing flow path 43 includes the outdoor heat exchanger 5. The outdoor heat exchanger 5 is connected between the compressor 1 and the battery throttling apparatus 23. With reference to FIG. 3, the thermal management system 100 operates in a second cooling mode. In other words, the thermal management system 100 radiates heat from only the battery pack. Specifically, the refrigerant in the compressor 1 may flow to the outdoor heat exchanger 5 via the indoor condenser 2 and the eighth solenoid valve 25. In this case, the indoor condenser 2 does not operate, to be specific, the indoor condenser 2 does not perform heat exchange. The refrigerant is liquefied into a liquid refrigerant in the outdoor heat exchanger 5, and the liquid refrigerant flows to the battery direct-cooling plate 21 via a one-way valve 6 and the battery throttling apparatus 23. The liquid refrigerant performs heat exchange with the battery pack through the battery direct-cooling plate 21, to decrease the temperature of the battery pack. The refrigerant after the heat exchange flows back to the compressor 1 via the fifth solenoid valve 18. This process is repeated, so that the heat can be dissipated from the battery pack.

According to some embodiments of the present disclosure, the second heat-releasing flow path 43 is communicated with the first heat-absorbing flow path 53. With reference to FIG. 2, the thermal management system 100 operates in a first cooling mode. In other words, the thermal management system 100 absorbs the heat in the vehicle cabin through the indoor vaporizer 10, to decrease the temperature of the vehicle cabin. Specifically, the refrigerant in the compressor 1 flows to the outdoor heat exchanger 5 via the indoor condenser 2 and the eighth solenoid valve 25. In this case, the indoor condenser 2 does not operate, to be specific, the indoor condenser 2 does not perform heat exchange. The outdoor heat exchanger 5 may liquefy the refrigerant and release heat. The liquefied refrigerant may flow to the indoor vaporizer 10 via the one-way valve 6, the third solenoid valve 8, and the first throttling apparatus 9. The liquid refrigerant is vaporized in the indoor vaporizer 10 to absorb the heat in the vehicle cabin, so as to decrease the temperature in the vehicle cabin. The vaporized refrigerant flows back to the compressor 1. This process is repeated, so that the vehicle cabin can be cooled.

With reference to FIG. 4, the thermal management system 100 may simultaneously cool the vehicle cabin and the battery pack. In this case, the thermal management system 100 operates in a third cooling mode. The refrigerant in the compressor 1 may flow to the outdoor heat exchanger 5 via the indoor condenser 2 and the eighth solenoid valve 25. The indoor condenser 2 does not operate, and the outdoor heat exchanger 5 may liquefy the refrigerant. The liquefied refrigerant may flow out via the one-way valve 6. The refrigerant that flows out may be divided into two parts. One part of the refrigerant flows to the indoor vaporizer 10 via the third solenoid valve 8 and the first throttling apparatus 9. In this case, the refrigerant is vaporized in the indoor vaporizer 10 and absorbs the heat in the vehicle cabin, to cool the vehicle cabin. The vaporized refrigerant flows back to the compressor 1. The other part of the refrigerant may flow to the battery direct-cooling plate 21 via the fourth throttling apparatus 232. The refrigerant may perform heat exchange with the battery pack through the battery direct-cooling plate 21, to decrease the temperature of the battery pack and ensure normal operating of the battery pack. The refrigerant after the heat exchange flows back to the compressor 1 via the fifth solenoid valve 18. This process is repeated, so that the battery pack and the vehicle cabin can be simultaneously cooled, and a user requirement can be better satisfied.

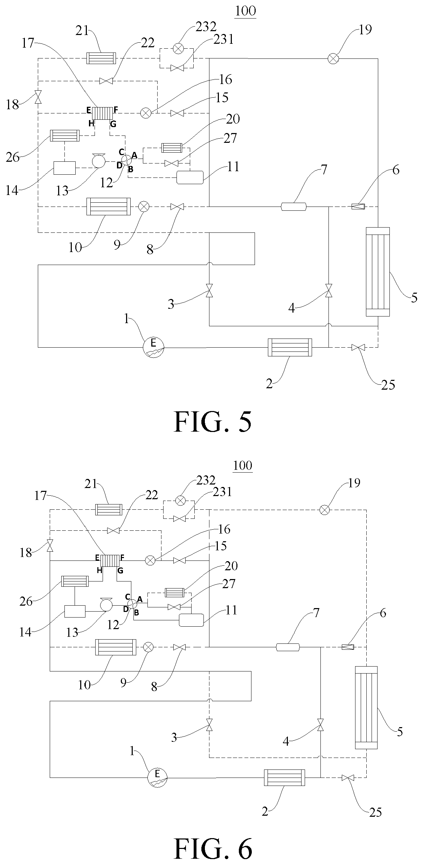

According to some embodiments of the present disclosure, the first heat-releasing flow path 42 is communicated with the second heat-absorbing flow path 54. With reference to FIG. 5, the thermal management system 100 operates in a first heating mode. In other words, the thermal management system 100 absorbs the heat in the outside air through the outdoor heat exchanger 5, to heat the vehicle cabin. Specifically, the refrigerant in the compressor 1 may flow to the indoor condenser 2. The refrigerant is liquefied in the indoor condenser 2 to release heat in the vehicle cabin, and increase the temperature in the vehicle cabin. The refrigerant after the heat exchange flows to the outdoor heat exchanger 5 via the second solenoid valve 4 and the second throttling apparatus 19. The outdoor heat exchanger 5 may vaporize the refrigerant to absorb the heat in the outside air, and the vaporized refrigerant flows to the compressor 1. This process is repeated, so that the vehicle cabin can be heated, to ensure comfort of a user during riding.

According to some embodiments of the present disclosure, the first heat-releasing flow path 42 is communicated with the third heat-absorbing flow path 55. With reference to FIG. 6, the fourth solenoid valve 15 is connected in series between the third throttling apparatus 16 and the compressor 1. The thermal management system 100 operates in a second heating mode. To be specific, the water-path heat exchanger 17 uses the heat of the engine 11 to heat the vehicle cabin. Specifically, the refrigerant in the compressor 1 flows to the indoor condenser 2. The indoor condenser 2 liquefies the refrigerant and releases a large amount of heat, to increase the temperature in the vehicle cabin. The refrigerant after the heat exchange may flow to the water-path heat exchanger 17 via the second solenoid valve 4, the fourth solenoid valve 15, and the third throttling apparatus 16. In addition, after the water in the engine 11 performs heat exchange with the engine 11, the water flows to the water-path heat exchanger 17 via the second valve port B, the fourth valve port D, the pump 13, and the warm air core 26. In this case, the warm air core 26 does not operate, and the refrigerant in the water-path heat exchanger 17 performs heat exchange with the water. The refrigerant whose temperature is increased flows back to the compressor 1, and the water whose temperature is decreased flows back to the engine 11 via the third valve port C, the first valve port A, and the water inlet 111. This process is repeated, so that the heat of the engine 11 can be effectively used to heat the vehicle cabin, thereby reducing the power consumption of the vehicle 200.

According to some embodiments of the present disclosure, with reference to FIG. 21 and FIG. 22, the battery thermal management flow path 60, the first heat-releasing flow path 42, and the second heat-releasing flow path 43 share a first common segment 605. An indoor condenser 2 is connected in the first common segment 605, and a seventeenth inlet 6051 of the first common segment 605 is connected to the first outlet 12 of the compressor 1. The battery thermal management flow path 60 and the first heat-releasing flow path 42 share a first branch segment 606. The second solenoid valve 4 is connected in the first branch segment 606. The second heat-releasing flow path 43 has a second branch segment 431, and the outdoor heat exchanger 5 and the eighth solenoid valve 25 are connected in the second branch segment 431. An eighteenth inlet 6061 of the first branch segment 606 and a nineteenth inlet 4311 of the second branch segment 431 are both connected to a seventeenth outlet 6052 of the first common segment 605.

The battery thermal management flow path 60, the first heat-releasing flow path 42, and the second heat-releasing flow path 43 share a second common segment 607. A liquid storage tank 7 is arranged in the second common segment 607. An eighteenth outlet 6062 of the first branch segment 606 and a nineteenth outlet 4312 of the second branch segment 431 are both connected to a twentieth inlet 6071 of the second common segment 607. The seventeenth outlet 6052 of the first common segment 605 and the twentieth inlet 6071 of the second common segment 607 are selectively communicated through the first branch segment 606 or the second branch segment 431. In this way, it is ensured that arrangement of flow paths in the thermal management system 100 is more compact.

It needs to be noted that the liquid storage tank 7 in the thermal management system 100 mainly has three functions. First, the liquid storage tank 7 stores a cooling agent such as a refrigerant. During operating of the thermal management system 100, the liquid storage tank 7 can mobilize the cooling agent in time to perform auxiliary operating. Second, the liquid storage tank 7 filters out impurities. The liquid storage tank 7 may filter out impurities generated in the thermal management system 100, so that the impurities do not affect normal operating of the thermal management system 100 due to blocking. Third, the liquid storage tank 7 has a drying function. The liquid storage tank 7 may absorb moisture in the thermal management system 100, to ensure that the thermal management system 100 is in a dry environment, and avoid a problem of water blocking or ice blocking caused in the thermal management system 100.

Further, with reference to FIG. 21 and FIG. 22, the second heat-absorbing flow path 54 and the second branch segment 431 share a third common segment 608. The outdoor heat exchanger 5 is connected in the third common segment 608. The second heat-absorbing flow path 54 further includes a front segment 541 of the second heat-absorbing flow path and a rear segment 542 of the second heat-absorbing flow path. The second throttling apparatus 19 is connected in the front segment 541 of the second heat-absorbing flow path, and the first solenoid valve 3 is connected in the rear segment 542 of the second heat-absorbing flow path. A twenty-first inlet 5411 of the front segment 541 of the second heat-absorbing flow path is connected to a twentieth outlet 6072 of the second common segment 607. A twenty-second outlet 5422 of the rear segment of the second heat-absorbing flow path is connected to the first inlet 11 of the compressor 1. The second branch segment 431 further includes a front segment 4313 of the second branch segment and a rear segment 4314 of the second branch segment. The eighth solenoid valve 25 is connected in the front segment of the second branch segment 431. The one-way valve 6 is connected in the rear segment 4314 of the second branch segment. A twenty-third inlet 4315 of the front segment 4313 of the second branch segment is connected to the seventeenth outlet 6052 of the first common segment 605, and a twenty-fourth outlet 4318 of the rear segment 4314 of the second branch segment is connected to the twentieth inlet 6071 of the second common segment 607. The twenty-first outlet 5412 of the front segment 541 of the second heat-absorbing flow path is separately connected to a twenty-fourth inlet 4317 of the rear segment 4314 of the second branch segment and one end of the third common segment 608. A twenty-second inlet 5421 of the rear segment of the second heat-absorbing flow path is separately connected to a twenty-third outlet 4316 of the front segment 4313 of the second branch segment and the other end of the third common segment 608. In this way, it is further ensured that the arrangement of the flow paths in the thermal management system 100 is more compact.

In some other optional embodiments, with reference to FIG. 21 and FIG. 22, the twenty-first outlet 5412 of the front segment 541 of the second heat-absorbing flow path is separately connected to the twenty-third outlet 4316 of the front segment 4313 of the second branch segment and the end of the third common segment 608, and the twenty-second inlet 5421 of the rear segment of the second heat-absorbing flow path is separately connected to the twenty-fourth inlet 4317 of the rear segment 4314 of the second branch segment and the other end of the third common segment 608.

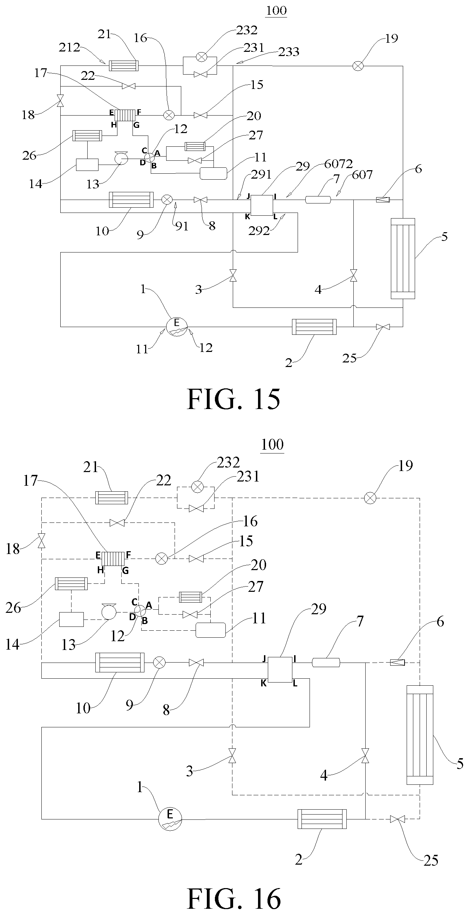

According to some other embodiments of the present disclosure, as shown in FIG. 15 to FIG. 18, the thermal management system further includes a coaxial tube heat exchanger 29. The coaxial tube heat exchanger 29 includes a first port I, a second port J, a third port K, and a fourth port L. The coaxial tube heat exchanger 29 is connected in series on a system thermal management flow path through the first port I and the fourth port L. The coaxial tube heat exchanger 29 is selectively connected in series with an air conditioning thermal management flow path and the battery thermal management flow path 60 through the second port J and the fourth port L.

With reference to FIG. 14, when an environmental temperature is from 15 °C to 20 °C, the thermal management system 100 may operate in a first dehumidification mode. In this case, the coaxial tube heat exchanger 29 is connected in series with the air conditioning thermal management flow path. The refrigerant in the compressor 1 flows to the indoor condenser 2. The indoor condenser 2 liquefies the refrigerant and releases a large amount of heat, to increase the temperature in the vehicle cabin, so as to dehumidify the vehicle cabin. The liquefied refrigerant flows to the coaxial tube heat exchanger 29 via the second solenoid valve 4, the liquid storage tank 7, and the first port I. The coaxial tube heat exchanger 29 may vaporize the refrigerant, and the vaporized refrigerant flows out via the second port J and flows to the indoor vaporizer 10 via the third solenoid valve 8 and the first throttling apparatus 9. The refrigerant continues to be vaporized in the indoor vaporizer 10, and the vaporized refrigerant may flow back to the compressor 1 via the third port K and the fourth port L of the coaxial tube heat exchanger 29. This process is repeated, so that the vehicle cabin is dehumidified.

With reference to FIG. 15, when an environmental temperature is from 5 °C to 15 °C, the thermal management system 100 may operate in a second dehumidification mode. In this case, the coaxial tube heat exchanger 29 may be simultaneously connected in series with the air conditioning thermal management flow path and the battery thermal management flow path 60. The refrigerant in the compressor 1 flows to the indoor condenser 2. The indoor condenser 2 liquefies the refrigerant and releases a large amount of heat, to increase the temperature in the vehicle cabin, so as to dehumidify the vehicle cabin. The liquefied refrigerant flows to the coaxial tube heat exchanger 29 via the second solenoid valve 4, the liquid storage tank 7, and the first port I. The coaxial tube heat exchanger 29 may vaporize the refrigerant, and the vaporized refrigerant is divided into two parts after flowing out via the second port J. One part of the refrigerant flows to the water-path heat exchanger 17 via the fourth solenoid valve 15 and the third throttling apparatus 16. The water-path heat exchanger 17 continues to vaporize the refrigerant, and the vaporized refrigerant flows back to the compressor 1 via the third port K and the fourth port L of the coaxial tube heat exchanger 29. The other part of the refrigerant may flow to the outdoor heat exchanger 5 via the second throttling apparatus 19. The outdoor heat exchanger 5 continues to vaporize the refrigerant, and the refrigerant in the outdoor heat exchanger 5 flows back to the compressor 1 via the first solenoid valve 3, and the third port K and the fourth port L of the coaxial tube heat exchanger 29. This process is repeated, so that the vehicle cabin is dehumidified.

With reference to FIG. 16, when frost occurs in the outdoor heat exchanger 5, the thermal management system 100 operates in a defrosting mode. The refrigerant in the compressor 1 flows to the indoor condenser 2. The indoor condenser 2 liquefies the refrigerant and releases heat, to increase the temperature in the vehicle cabin. The liquefied refrigerant flows to the outdoor heat exchanger 5 via the eighth solenoid valve 25. The outdoor heat exchanger 5 vaporizes the refrigerant. The temperature of the vaporized refrigerant is high, so that frost on a surface of the outdoor heat exchanger 5 can be melted. The vaporized refrigerant may flow to the coaxial tube heat exchanger 29 via the one-way valve 6, the liquid storage tank 7, and the first port I of the coaxial tube heat exchanger 29. The refrigerant in the coaxial tube heat exchanger 29 may flow to the water-path heat exchanger 17 via the second port J, the fourth solenoid valve 15, and the third throttling apparatus 16. In addition, the heating element 14 may heat the water in the heating element 14, and the heated water may flow to the water-path heat exchanger 17 via the warm air core 26. The refrigerant in the water-path heat exchanger 17 performs heat exchange with the water in the water-path heat exchanger 17. The refrigerant whose temperature is increased flows back to the compressor 1 via the third port K and the fourth port L of the coaxial tube heat exchanger 29. The water whose temperature is decreased may flow back to the heating element 14 via the third valve port C and the fourth valve port D of the control valve 12 and the pump 13. This process is repeated, so that the heat of the heating element 14 can be effectively used to defrost the outdoor heat exchanger 5.

The coaxial tube heat exchanger 29 is arranged, so that the low-temperature refrigerant can be used when the compressor 1 returns air. To be specific, when the compressor 1 returns air, the low-temperature refrigerant performs heat exchange with the high-temperature refrigerant at the outlet of the liquid storage tank 7, so that a supercooling degree of the high-temperature refrigerant can be improved, thereby improving a performance coefficient of the thermal management system 100, and a superheating degree of the low-temperature refrigerant can also be improved when the compressor 1 returns air, thereby avoiding liquid hammering on the compressor 1, and improving reliability of the compressor 1.

According to the thermal management system 100 in the embodiments of the present disclosure, all heat exchangers (to be specific, the indoor condenser 2, the outdoor heat exchanger 5, the indoor vaporizer 10, the water-path heat exchanger 17, or the coaxial tube heat exchanger 29) and all thermal sources (to be specific, a thermal source of the engine 11, a thermal source of the heating element 14, or a thermal source of the exhaust gas of the vehicle 200) are properly used, so that the thermal management system 100 has multiple running modes, and heating and cooling requirements on the thermal management system 100 under different operating conditions are satisfied in a most economic and energy efficient manner.

Details of an operation mode of the thermal management system 100 in the embodiments of the present disclosure are as follows.

### (1) Cooling cycle

As shown in FIG. 2, the thermal management system 100 operates in the first cooling mode, to be specific, the thermal management system 100 cools only the vehicle cabin. In this case, the second solenoid valve 4, the fourth solenoid valve 15, and the seventh solenoid valve 231 are closed, and the second throttling apparatus 19 and the fourth throttling apparatus 232 are turned off. The third solenoid valve 8 and the eighth solenoid valve 25 are opened, and the first throttling apparatus 9 is turned on. The refrigerant in the compressor 1 flows to the outdoor heat exchanger 5 via the indoor condenser 2 and the eighth solenoid valve 25. The indoor condenser 2 does not operate, and the outdoor heat exchanger 5 releases the heat of the refrigerant and decreases the temperature of the refrigerant. The liquefied refrigerant flows to the indoor vaporizer 10 via the one-way valve 6, the liquid storage tank 7, the third solenoid valve 8, and the first throttling apparatus 9. The indoor vaporizer 10 enables the refrigerant to absorb heat and vaporizes the refrigerant, and the vaporized refrigerant flows back to the compressor 1.

As shown in FIG. 3, the thermal management system 100 operates in the second cooling mode, to be specific, the thermal management system 100 cools only the battery pack. In this case, the second solenoid valve 4, the third solenoid valve 8, the fourth solenoid valve 15, the sixth solenoid valve 22, and the seventh solenoid valve 231 are closed, and the second throttling apparatus 19 is turned off. The fifth solenoid valve 18 are the eighth solenoid valve 25 are opened, and the fourth throttling apparatus 232 is turned on. The refrigerant in the compressor 1 flows to the outdoor heat exchanger 5 via the indoor condenser 2 and the eighth solenoid valve 25. The indoor condenser 2 does not operate, and the outdoor heat exchanger 5 releases the heat of the refrigerant and decreases the temperature of the refrigerant. The liquefied refrigerant flows to the battery direct-cooling plate 21 via the one-way valve 6, the liquid storage tank 7, and the fourth throttling apparatus 232. The liquid refrigerant performs heat exchange with the battery pack through the battery direct-cooling plate 21, and the refrigerant after the heat exchange flows back to the compressor 1 via the fifth solenoid valve 18.

As shown in FIG. 4, the thermal management system 100 operates in the third cooling mode, to be specific, the thermal management system 100 simultaneously cools the battery pack and the vehicle cabin. In this case, the second solenoid valve 4, the fourth solenoid valve 15, the sixth solenoid valve 22, and the seventh solenoid valve 231 are closed, and the second throttling apparatus 19 is turned off. The third solenoid valve 8, the fifth solenoid valve 18, and the eighth solenoid valve 25 are opened, and the first throttling apparatus 9 and the fourth throttling apparatus 232 are turned on. In this case, the refrigerant in the compressor 1 flows to the outdoor heat exchanger 5 via the indoor condenser 2 and the eighth solenoid valve 25. The indoor condenser 2 does not operate, and the outdoor heat exchanger 5 releases the heat of the refrigerant and decreases the temperature of the refrigerant. The liquefied refrigerant flows to the liquid storage tank 7 via the one-way valve 6. The refrigerant that flows out of the liquid storage tank 7 is divided into two parts. One part of the refrigerant flows to the indoor vaporizer 10 via the third solenoid valve 8 and the first throttling apparatus 9. The indoor vaporizer 10 enables the refrigerant to absorb heat and vaporizes the refrigerant, and the vaporized refrigerant flows back to the compressor 1. The other part of the refrigerant flows to the battery direct-cooling plate 21 via the fourth throttling apparatus 232. The liquid refrigerant performs heat exchange with the battery pack through the battery direct-cooling plate 21, and the refrigerant after the heat exchange flows back to the compressor 1 via the fifth solenoid valve 18.

When the thermal management system 100 operates for cooling, the engine 11 may radiate heat through the engine radiator 20, to ensure normal operating of the engine 11.

### (2) Heating cycle

As shown in FIG. 5, the thermal management system 100 operates in the first heating mode, to be specific, the thermal management system 100 heats only the vehicle cabin. In this case, the third solenoid valve 8, the fourth solenoid valve 15, the seventh solenoid valve 231 and the eighth solenoid valve 25 are closed, and the fourth throttling apparatus 232 is turned off. The first solenoid valve 3 and the second solenoid valve 4 are opened, and the second throttling apparatus 19 is turned on. The refrigerant in the compressor 1 flows to the indoor condenser 2, and the indoor condenser 2 liquefies the refrigerant. The liquefied refrigerant flows to the outdoor heat exchanger 5 via the second solenoid valve 4, the liquid storage tank 7, and the second throttling apparatus 19. The outdoor heat exchanger 5 vaporizes the refrigerant, and the vaporized refrigerant flows back to the compressor 1 via the first solenoid valve 3.

As shown in FIG. 6, the thermal management system 100 operates in the second heating mode, to be specific, the thermal management system 100 uses the heat of the engine 11 to heat the vehicle cabin. In this case, the third solenoid valve 8, the seventh solenoid valve 231, and the eighth solenoid valve 25 are closed, and the second throttling apparatus 19 and the fourth throttling apparatus 232 are turned off. The second solenoid valve 4 and the fourth solenoid valve 15 are opened, and the third throttling apparatus 16 is turned on. The refrigerant in the compressor 1 flows to the indoor condenser 2, and the indoor condenser 2 liquefies the refrigerant. The liquefied refrigerant flows to the water-path heat exchanger 17 via the second solenoid valve 4, the liquid storage tank 7, the fourth solenoid valve 15, and the third throttling apparatus 16. The refrigerant in the water-path heat exchanger 17 performs heat exchange with the water, and the refrigerant after the heat exchange flows back to the compressor 1. In addition, the water in the engine 11 flows to the water-path heat exchanger 17 via the water outlet 112, the second valve port B, the fourth valve port D, the pump 13, and the warm air core 26. The water after the heat exchange flows back to the engine 11 via the third valve port C, the first valve port A, and the water inlet 111.

As shown in FIG. 7, the thermal management system 100 operates in the third heating mode, to be specific, the thermal management system 100 uses the heat of the outside air and the heat of the engine 11 to heat the vehicle cabin. In this case, the third solenoid valve 8, the seventh solenoid valve 231, and the eighth solenoid valve 25 are closed, and the fourth throttling apparatus 232 is turned off. The first solenoid valve 3, the second solenoid valve 4, and the fourth solenoid valve 15 are opened, and the second throttling apparatus 19, and the third throttling apparatus 16 are turned on. The refrigerant in the compressor 1 flows to the indoor condenser 2, and the indoor condenser 2 liquefies the refrigerant. The liquefied refrigerant flows to drying tank 7 via the second solenoid valve 4. The refrigerant that flows out of the dryer is divided into two parts. One part of the refrigerant flows to the outdoor heat exchanger 5 via the second throttling apparatus 19. The outdoor heat exchanger 5 vaporizes the refrigerant, and the vaporized refrigerant flows back to the compressor 1 via the first battery valve. The other part of the refrigerant flows to the water-path heat exchanger 17 via the fourth solenoid valve 15 and the third throttling apparatus 16. The refrigerant in the water-path heat exchanger 17 performs heat exchange with the water, and the refrigerant after the heat exchange flows back to the compressor 1. In addition, the water in the engine 11 flows to the water-path heat exchanger 17 via the water outlet 112, the second valve port B, the fourth valve port D, the pump 13, and the warm air core 26. The water after the heat exchange flows back to the engine 11 via the third valve port C, the first valve port A, and the water inlet 111.

As shown in FIG. 8, the thermal management system 100 operates in the fourth heating mode, to be specific, the thermal management system 100 cools the battery pack and heats the vehicle cabin. In this case, the third solenoid valve 8, the fourth solenoid valve 15, the sixth solenoid valve 22, the seventh solenoid valve 231, and the eighth solenoid valve 25 are closed, and the second throttling apparatus 19 is turned off. The second solenoid valve 4 and the fifth solenoid valve 18 are opened, and the fourth throttling apparatus 232 is turned on. The refrigerant in the compressor 1 flows to the indoor condenser 2, and the indoor condenser 2 liquefies the refrigerant. The liquefied refrigerant flows to the battery direct-cooling plate 21 via the liquid storage tank 7 and the fourth throttling apparatus 232. The liquid refrigerant radiates heat from the battery pack through the battery direct-cooling plate 21. Then, the refrigerant flows to the compressor 1 via the fifth solenoid valve 18.

As shown in FIG. 9, the thermal management system 100 operates in the fifth heating mode, to be specific, the thermal management system 100 uses only the heat of the engine 11 to heat the vehicle cabin. In this case, after the water in the engine 11 is heated, the water flows to the water-path heat exchanger 17 via the second valve port B and the fourth valve port D of the control valve 12, the pump 13, the heating element 14, and the warm air core 26, and performs heat exchange when flowing through the water-path heat exchanger 17. The heating element 14 does not operate, and the water after the heat exchange flows back to the engine 11 via the third valve port C and the first valve port A of the control valve 12 and the cutoff valve 27.

As shown in FIG. 10, the thermal management system 100 operates in the sixth heating mode, to be specific, the thermal management system 100 heats the vehicle cabin by using only the heat of the heating element 14. In this case, only a part of the engine water path 70 operates. The heating element 14 may heat the water in the heating element 14, and the heated water may flow to the water-path heat exchanger 17 via the warm air core 26. At least one of the warm air core 26 and the water-path heat exchanger 17 performs heat exchange with the heated water. The water after the heat exchange may flow back to the heating element 14 via the third valve port C and the fourth valve port D of the control valve 12 and the pump 13.

As shown in FIG. 11, the thermal management system 100 operates in the seventh heating mode. In this case, the third solenoid valve 8, the fourth solenoid valve 15, the fifth solenoid valve 18, and the eighth solenoid valve 25 are closed, and the second throttling apparatus 19 and the fourth throttling apparatus 232 are turned off. The second solenoid valve 4, the sixth solenoid valve 22, and the seventh solenoid valve 231 are opened, and the third throttling apparatus 16 is turned on. The refrigerant in the compressor 1 flows to the battery direct-cooling plate 21 via the indoor condenser 2, the second solenoid valve 4, the liquid storage tank 7, and the seventh solenoid valve 231. When the indoor condenser 2 does not operate, the thermal management system 100 uses the heat of the engine 11 to heat the battery pack. When the indoor condenser 2 operates, the thermal management system 100 uses the heat of the engine 11 to simultaneously heat the vehicle cabin and the battery pack. Then, the refrigerant flows to the water-path heat exchanger 17 via the sixth solenoid valve 22 and the third throttling apparatus 16. The refrigerant in the water-path heat exchanger 17 performs heat exchange with the water, and the refrigerant after the heat exchange flows back to the compressor 1. In addition, the water in the engine 11 flows to the water-path heat exchanger 17 via the water outlet 112, the second valve port B, the fourth valve port D, the pump 13, and the warm air core 26. The water after the heat exchange flows back to the engine 11 via the third valve port C, the first valve port A, and the water inlet 111.

As shown in FIG. 12, the thermal management system 100 operates in the eighth heating mode. In this case, the third solenoid valve 8, the fourth solenoid valve 15, the fifth solenoid valve 18, and the eighth solenoid valve 25 are closed, and the second throttling apparatus 19 and the fourth throttling apparatus 232 are turned off. The second solenoid valve 4, the sixth solenoid valve 22, and the seventh solenoid valve 231 are opened, and the third throttling apparatus 16 is turned on. The refrigerant in the compressor 1 flows to the battery direct-cooling plate 21 via the indoor condenser 2, the second solenoid valve 4, the liquid storage tank 7, and the seventh solenoid valve 231. When the indoor condenser 2 does not operate, the thermal management system 100 uses the heat of the heating element 14 to heat the battery pack. When the indoor condenser 2 operates, the thermal management system 100 uses the heat of the heating element 14 to simultaneously heat the vehicle cabin and the battery pack. Then, the refrigerant flows to the water-path heat exchanger 17 via the sixth solenoid valve 22 and the third throttling apparatus 16. The heating element 14 may heat the water in the heating element 14, and the heated water may flow to the water-path heat exchanger 17 via the warm air core 26. At least one of the warm air core 26 and the water-path heat exchanger 17 performs heat exchange with the heated water. The water after the heat exchange may flow back to the heating element 14 via the third valve port C and the fourth valve port D of the control valve 12 and the pump 13.

As shown in FIG. 13 and FIG. 21, the thermal management system 100 operates in the ninth heating mode. In this case, the second solenoid valve 4, the fifth solenoid valve 18, the seventh solenoid valve 231, and the ninth solenoid valve 30 are opened, and the first throttling apparatus 9 is turned on. The first solenoid valve 3, the third solenoid valve 8, the fourth solenoid valve 15, the sixth solenoid valve 22, and the eighth solenoid valve 25 are closed, and the second throttling apparatus 19, the third throttling apparatus 16, and the fourth throttling apparatus 232 are turned off. The refrigerant in the compressor 1 flows to the battery direct-cooling plate 21 via the indoor condenser 2, the second solenoid valve 4, the liquid storage tank 7, and the seventh solenoid valve 231. In this case, the indoor condenser 2 does not operate. The high-temperature refrigerant in the battery direct-cooling plate 21 may perform heat exchange with the low-temperature battery pack, to increase the temperature of the battery pack. The refrigerant after the heat exchange flows out of the battery direct-cooling plate 21, and flows to the first throttling apparatus 9 via the ninth solenoid valve 30. After the refrigerant is throttled and the temperature of the refrigerant is decreased by the first throttling apparatus 9, the refrigerant flows to the indoor vaporizer 10, and is vaporized in the indoor vaporizer 10, to increase the temperature in the vehicle cabin. The vaporized refrigerant flows back to the compressor 1.

As shown in FIG. 14 and FIG. 22, the thermal management system 100 operates in the tenth heating mode. The first solenoid valve 3, the second solenoid valve 4, the seventh solenoid valve 231, and the tenth solenoid valve 31 are opened, and the second throttling apparatus 19 is turned on. The third solenoid valve 8, the fourth solenoid valve 15, the fifth solenoid valve 18, the sixth solenoid valve 22, the eighth solenoid valve 25, and the eleventh solenoid valve 32 are closed, and the first throttling apparatus 9, the third throttling apparatus 16, and the fourth throttling apparatus 232 are turned off. The refrigerant in the compressor 1 flows to the battery direct-cooling plate 21 via the indoor condenser 2, the second solenoid valve 4, the liquid storage tank 7, and the seventh solenoid valve 231. The high-temperature refrigerant in the battery direct-cooling plate 21 performs heat exchange with the battery pack, to increase the temperature of the battery pack. The refrigerant after the heat exchange flows to the outdoor heat exchanger 5 via the tenth solenoid valve 31 and the second throttling apparatus 19. After the refrigerant is vaporized in the outdoor heat exchanger 5, the refrigerant flows back to the compressor 1 via the first solenoid valve 3.

Referring to FIG. 21A, a vehicle 200 (not shown in the figure) according to an embodiment of a second aspect of the present disclosure includes the thermal management system 100 in the embodiment of the first aspect of the present disclosure.

According to the vehicle 200 in the embodiments of the present disclosure, operation modes of the vehicle 200 are increased by using the thermal management system 100, so that the vehicle 200 can satisfy heating and cooling requirements under different operating conditions, and power consumption of the entire vehicle can be reduced.

Other configurations and operations of the vehicle 200 according to the embodiments of the present invention are known to those of ordinary skill in the art and will not be described in detail herein.

It needs to be understood that, in the descriptions of the present disclosure, a direction or positional relationship indicated by terms such as "center", "length", "width", "thickness", "up", "down", "front", "back", "left", "right", "vertical", "horizontal", "top", "bottom", "in", and "out" is a direction or positional relationship based on illustrations in the drawings, and is merely intended for ease or brevity of description of the present disclosure, but does not necessarily mean or imply that the indicated device or component is provided in the specified direction or constructed or operated in the specified direction. Therefore, such terms are not to be understood as a limitation on the present disclosure.

In the descriptions of the present disclosure, it should be noted that, unless otherwise clearly specified and defined, terms such as "mounting", "interconnection", and "connection" shall be understood in a broad sense, for example, may be a fixing connection, a detachable connection, an integral connection, a mechanical connection, an electrical connection, a direct connection, an indirect connection by using an intermediate medium, and communication between interiors of two components. A person of ordinary skill in the art may understand specific meanings of the terms in the present disclosure according to specific situations.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily refer to a same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A thermal management system (100), comprising:
a compressor (1);
at least one heat-releasing flow path (40), each heat-releasing flow path (40) comprising a heat-releasing member (41), and a second inlet (411) of the heat-releasing member (41) being connected to a first outlet (12) of the compressor (1); and at least one heat-absorbing flow path (50), each heat-absorbing flow path (50) comprising a throttling apparatus (51) and a heat-absorbing member (52), a third inlet (511) of the throttling apparatus (51) being selectively communicated with or cut off from a second outlet (412) of the heat-releasing member (41), a third outlet (512) of the throttling apparatus (51) being connected to a fourth inlet (521) of the heat-absorbing member (52), and a fourth outlet (522) of the heat-absorbing member (52) being connected to a first inlet (11) of the compressor (1); and
a battery thermal management flow path (60), the battery thermal management flow path (60) comprising a battery throttling apparatus (23) and a battery direct-cooling plate (21), a fifth inlet (233) of the battery throttling apparatus (23) being selectively communicated with the first outlet (12) of the compressor (1) or the second outlet (412) of the heat-releasing member (41), a fifth outlet (234) of the battery throttling apparatus (23) being connected to a sixth inlet (211) of the battery direct-cooling plate (21), and a sixth outlet (212) of the battery direct-cooling plate (21) being selectively communicated with the third inlet (511) of the throttling apparatus (51) or the first inlet (11) of the compressor (1), wherein the battery throttling apparatus (23) is switchable between a full-open state and a throttling state.

2. The thermal management system (100) according to claim 1, wherein the heat-absorbing flow path (50) comprises:
a first heat-absorbing flow path (53), a first throttling apparatus (9) and an indoor vaporizer (10) are sequentially connected in series on the first heat-absorbing flow path (53), a seventh inlet (91) of the first throttling apparatus (9) is connected to the second outlet (412) of the heat-releasing member (41), and an eighth outlet (102) of the indoor vaporizer (10) is connected to the first inlet (11) of the compressor (1).

3. The thermal management system (100) according to claim 2, wherein the battery thermal management flow path (60) comprises a battery direct-cooling branch (601) and a first battery heat-absorbing branch (602), a ninth inlet (6011) of the battery direct-cooling branch (601) and a tenth inlet (6021) of the first battery heat-absorbing branch (602) are both connected to the sixth outlet (212) of the battery direct-cooling plate (21), a ninth outlet (6012) of the battery direct-cooling branch (601) is connected to the first inlet (11) of the compressor (1), and a tenth outlet (6022) of the first battery heat-absorbing branch (602) is connected to the seventh inlet (91) of the first throttling apparatus (9),
wherein the sixth outlet (212) of the battery direct-cooling plate (21) is selectively communicated with or cut off from the first inlet (11) of the compressor (1) through the battery direct-cooling branch (601), and the sixth outlet (212) of the battery direct-cooling plate (21) is selectively communicated with or cut off from the seventh inlet (91) of the first throttling apparatus (9) through the first battery heat-absorbing branch (602).

4. The thermal management system (100) according to any one of claims 1 to 3, wherein the heat-absorbing flow path (50) comprises:
a second heat-absorbing flow path (54), a second throttling apparatus (19) and an outdoor heat exchanger (5) are sequentially connected in series on the second heat-absorbing flow path (54), an eleventh inlet (191) of the second throttling apparatus (19) is connected to the sixth outlet (212) of the battery direct-cooling plate (21), and a twelfth outlet (52) of the outdoor heat exchanger (5) is connected to the first inlet (11) of the compressor (1).

5. The thermal management system (100) according to claim 4, wherein the battery thermal management flow path (60) comprises a battery direct-cooling branch (601) and a second battery heat-absorbing branch (603), the ninth inlet (6011) of the battery direct-cooling branch (601) and a thirteenth inlet (6031) of the second battery heat-absorbing branch (603) are both connected to the sixth outlet (212) of the battery direct-cooling plate (21), the ninth outlet (6012) of the battery direct-cooling branch (601) is connected to the first inlet (11) of the compressor (1), and a thirteenth outlet (6032) of the second battery heat-absorbing branch (603) is connected to the eleventh inlet (191) of the second throttling apparatus (19),
wherein the sixth outlet (212) of the battery direct-cooling plate (21) is selectively communicated with or cut off from the first inlet (11) of the compressor (1) through the battery direct-cooling branch (601), and the sixth outlet (212) of the battery direct-cooling plate (21) is selectively communicated with or cut off from the eleventh inlet (191) of the second throttling apparatus (19) through the second battery heat-absorbing branch (603).

6. The thermal management system (100) according to any one of claims 1 to 5, wherein the heat-absorbing flow path (50) comprises:
a third heat-absorbing flow path (55), a third throttling apparatus (16) and a water-path heat exchanger (17) are sequentially connected in series on the third heat-absorbing flow path (55), a fourteenth inlet (161) of the third throttling apparatus (16) is connected to the sixth outlet (212) of the battery direct-cooling plate (21), and a fifteenth outlet (172) of the water-path heat exchanger (17) is connected to the first inlet (11) of the compressor (1).

7. The thermal management system (100) according to claim 6, wherein the battery thermal management flow path (60) comprises a battery direct-cooling branch (601) and a third battery heat-absorbing branch (604), the ninth inlet (6011) of the battery direct-cooling branch (601) and a sixteenth inlet (6041) of the third battery heat-absorbing branch (604) are both connected to the sixth outlet (212) of the battery direct-cooling plate (21), the ninth outlet (6012) of the battery direct-cooling branch (601) is connected to the first inlet (12) of the compressor (1), and a sixteenth outlet (6042) of the third battery heat-absorbing branch (604) is connected to the fourteenth inlet (161) of the third throttling apparatus (16),
wherein the sixth outlet (212) of the battery direct-cooling plate (21) is selectively communicated with or cut off from the first inlet (11) of the compressor (1) through the battery direct-cooling branch (601), and the sixth outlet (212) of the battery direct-cooling plate (21) is selectively communicated with or cut off from the fourteenth inlet (161) of the third throttling apparatus (16) through the third battery heat-absorbing branch (604).

8. The thermal management system (100) according to claim 6 or 7, wherein the water-path heat exchanger (17) comprises a first interface (E), a second interface (F), a third interface (G), and a fourth interface (H), the first interface (E) is connected to the first inlet (11) of the compressor (1), and the second interface (F) is communicated with a fourteenth outlet (162) of the third throttling apparatus (16); the thermal management system (100) further comprising:
an engine water path (70), the engine water path (70) comprising an engine (11), a water inlet (111) of the engine (11) being communicated with the third interface (G), and a water outlet (112) of the engine (11) being communicated with the fourth interface (H).

9. The thermal management system (100) according to claim 8, wherein the engine water path (70) further comprises:
a control valve (12), the control valve (12) comprises a first valve port (A), a second valve port (B), a third valve port (C), and a fourth valve port (D), the first valve port (A) is connected to the water inlet (111), the second valve port (A) is connected to the water outlet (112), and the third valve port (C) is connected to the third interface (G) of the water-path heat exchanger (17), wherein when one of the first valve port (A) and the third valve port (C) is communicated with one of the second valve port (B) and the fourth valve port (D), the other of the first valve port (A) and the third valve port (C) is communicated with the other of the second valve port (B) and the fourth valve port (D);
a pump (13), the pump (13) is located between the water-path heat exchanger (17) and the engine (11); and
a warm air core (26), one end of the warm air core (26) is connected to the water outlet (111), and the other end of the warm air core (26) is connected to the fourth interface (H) of the water-path heat exchanger (17).

10. The thermal management system (100) according to claim 8 or 9, wherein the engine water path (70) further comprises:
a heating element (14), one end of the heating element (14) is connected to the fourth interface (H) of the water-path heat exchanger (17), and the other end of the heating element (14) is connected to the pump (13).

11. The thermal management system (100) according to any one of claims 8 to 10, wherein the engine water path further comprises:
an exhaust gas and residual heat recovery apparatus (28), the exhaust gas and residual heat recovery apparatus (28) are arranged between the warm air core (26) and the engine (11).

12. The thermal management system (100) according to any one of claims 8 to 11, wherein the engine water path (70) further comprises:
a cutoff valve (27) and an engine radiator (20) are connected in parallel, the cutoff valve (27) and the engine radiator (20) are arranged between the control valve (12) and the engine (11).

13. The thermal management system (100) according to any one of claims 1 to 12, wherein
the heat-releasing flow path (40) comprises:
a first heat-releasing flow path (42), the first heat-releasing flow path (42) comprises an indoor condenser (2), and the indoor condenser (2) is connected between the compressor (1) and the battery throttling apparatus (23).

14. The thermal management system (100) according to any one of claims 1 to 13, wherein the heat-releasing flow path (40) comprises:
a second heat-releasing flow path (43), the second heat-releasing flow path (43) comprises the outdoor heat exchanger (5), and the outdoor heat exchanger (5) is connected between the compressor (1) and the battery throttling apparatus (23).

15. The thermal management system (100) according to any one of claims 1 to 14, wherein
the heat-absorbing flow path (50) comprises:
a first heat-absorbing flow path (53), a first throttling apparatus (9) and an indoor vaporizer (10) are sequentially connected in series on the first heat-absorbing flow path (53), a seventh inlet (91) of the first throttling apparatus (9) is connected to the second outlet (412) of the heat-releasing member, and an eighth outlet (102) of the indoor vaporizer (10) is connected to the first inlet (11) of the compressor (1);
the heat-releasing flow path (40) comprises:
a second heat-releasing flow path (43), the second heat-releasing flow path (43) comprises an outdoor heat exchanger (5), and the outdoor heat exchanger (5) is connected between the compressor (1) and the battery throttling apparatus (23); and
the second heat-releasing flow path (43) is communicated with the first heat-absorbing flow path (53).

16. The thermal management system (100) according to any one of claims 1 to 14, wherein
the heat-absorbing flow path (50) comprises:
a first heat-absorbing flow path (53), a first throttling apparatus (9) and an indoor vaporizer (10) are sequentially connected in series on the first heat-absorbing flow path (53), a seventh inlet (91) of the first throttling apparatus (9) is connected to the second outlet (412) of the heat-releasing member (41), and an eighth outlet (102) of the indoor vaporizer (10) is connected to the first inlet (11) of the compressor (1);
the heat-releasing flow path (40) comprises:
a first heat-releasing flow path (42), the first heat-releasing flow path (42) comprises an indoor condenser (2), and the indoor condenser (2) is connected between the compressor (1) and the battery throttling apparatus (23); and
the first heat-releasing flow path (42) is communicated with the first heat-absorbing flow path (53).

17. The thermal management system (100) according to any one of claims 1 to 14, wherein
the heat-releasing flow path (40) comprises:
a first heat-releasing flow path (42), the first heat-releasing flow path (42) comprises an indoor condenser (2), and the indoor condenser (2) is connected between the compressor (1) and the battery throttling apparatus (23);
the heat-absorbing flow path (50) comprises:
a second heat-absorbing flow path (54), a second throttling apparatus (19) and an outdoor heat exchanger (5) are sequentially connected in series on the second heat-absorbing flow path (54), an eleventh inlet (191) of the second throttling apparatus (19) is connected to the sixth outlet (212) of the battery direct-cooling plate (21), and a twelfth outlet (52) of the outdoor heat exchanger (5) is connected to the first inlet (11) of the compressor (1); and
the first heat-releasing flow path (42) is communicated with the second heat-absorbing flow path (54).

18. The thermal management system (100) according to any one of claims 1 to 14, wherein
the heat-releasing flow path (40) comprises:
a first heat-releasing flow path (42), the first heat-releasing flow path (42) comprises an indoor condenser (2), and the indoor condenser (2) is connected between the compressor (1) and the battery throttling apparatus (23);
the heat-absorbing flow path (50) comprises:
a third heat-absorbing flow path (55), a third throttling apparatus (16) and a water-path heat exchanger (17) are sequentially connected in series on the third heat-absorbing flow path (55), a fourteenth inlet (161) of the third throttling apparatus (16) is connected to the sixth outlet (211) of the battery direct-cooling plate (21), and a fifteenth outlet (172) of the water-path heat exchanger (17) is connected to the first inlet (11) of the compressor (1); and
the first heat-releasing flow path (42) is communicated with the third heat-absorbing flow path (55).

19. The thermal management system (100) according to any one of claims 1 to 14, wherein
the heat-releasing flow path (40) comprises:
a first heat-releasing flow path (42), the first heat-releasing flow path (42) comprises an indoor condenser (2), and the indoor condenser (2) is connected between the compressor (1) and the battery throttling apparatus (23); and
a second heat-releasing flow path (43), the second heat-releasing flow path (43) comprises an outdoor heat exchanger (5), and the outdoor heat exchanger (5) is connected between the compressor (1) and the battery throttling apparatus (23);
the battery thermal management flow path (60), the first heat-releasing flow path (42), and the second heat-releasing flow path (43) sharing a first common segment (605), and a seventeenth inlet (6051) of the first common segment (605) is connected to the first outlet (12) of the compressor (1);
the battery thermal management flow path (60) and the first heat-releasing flow path (42) sharing a first branch segment (606), the second heat-releasing flow path (43) having a second branch segment (431), and an eighteenth inlet (6061) of the first branch segment (606) and a nineteenth inlet (4311) of the second branch segment (431) being both connected to a seventeenth (6052) outlet of the first common segment (605);
the battery thermal management flow path (60), the first heat-releasing flow path (42), and the second heat-releasing flow path (43) sharing a second common segment (607), and an eighteenth outlet (6062) of the first branch segment (606) and a nineteenth outlet (4312) of the second branch segment (431) being both connected to a twentieth inlet (6071) of the second common segment (607); and
the seventeenth outlet (6052) of the first common segment (605) is selectively communicated with the twentieth inlet (6071) of the second common segment (607) through the first branch segment (606) or the second branch segment (431).

20. The thermal management system (100) according to claim 19, wherein the heat-absorbing flow path (50) comprises:
a second heat-absorbing flow path (54), a second throttling apparatus (19) and an outdoor heat exchanger (5) are sequentially connected in series on the second heat-absorbing flow path (54), an eleventh inlet (191) of the second throttling apparatus (19) is connected to the sixth outlet (212) of the battery direct-cooling plate (21), and a twelfth outlet (52) of the outdoor heat exchanger (5) being connected to the first inlet (11) of the compressor (1);
the second heat-absorbing flow path (54) and the second branch segment (431) sharing a third common segment (608);
the second heat-absorbing flow path (54) further comprises a front segment (541) of the second heat-absorbing flow path and a rear segment (542) of the second heat-absorbing flow path, a twenty-first inlet (5411) of the front segment (541) of the second heat-absorbing flow path being connected to a twentieth outlet (6072) of the second common segment (607), and a twenty-second outlet (5422) of the rear segment (542) of the second heat-absorbing flow path being connected to the first inlet (11) of the compressor (1);
the second branch segment (431) further comprises a front segment (4313) of the second branch segment and a rear segment (4314) of the second branch segment, a twenty-third inlet (4315) of the front segment of the second branch segment is connected to the seventeenth outlet (6052) of the first common segment (605), and a twenty-fourth outlet (4318) of the rear segment (4314) of the second branch segment is connected to the twentieth inlet (6071) of the second common segment (607); and
the twenty-first outlet (5411) of the front segment (541) of the second heat-absorbing flow path is separately connected to a twenty-fourth inlet (4317) of the rear segment (4314) of the second branch segment and one end of the third common segment (608), and a twenty-second inlet (5421) of the rear segment (542) of the second heat-absorbing flow path is separately connected to a twenty-third outlet (4316) of the front segment (4313) of the second branch segment and the other end of the third common segment (608), or
the twenty-first outlet (5411) of the front segment (541) of the second heat-absorbing flow path separately connected to the twenty-third outlet (4316) of the front segment (4313) of the second branch segment and the end of the third common segment (608), and the twenty-second inlet (5421) of the rear segment (542) of the second heat-absorbing flow path is separately connected to the twenty-fourth inlet (4317) of the rear segment (4314) of the second branch segment and the other end of the third common segment (608).

21. The thermal management system (100) according to claim 19 or 20, wherein a liquid storage tank (7) is arranged in the second common segment (607).

22. The thermal management system (100) according to claim 20 or 21, further comprising:
a coaxial tube heat exchanger (29), the coaxial tube heat exchanger (29) comprising a first channel (291) and a second channel (292), the first channel (291) being sleeved outside the second channel (292), the first channel (291) comprising a first port (I) and a second port (J), the second channel (292) comprising a third port (K) and a fourth port (L), the first port (I) being communicated with the twentieth outlet (6072) of the second common segment (607), the second port (J) separately being communicated with the fifth inlet (233) of the battery throttling apparatus (23) and the seventh inlet (91) of the first throttling apparatus (9), the third port (K) being communicated with the sixth outlet (212) of the battery direct-cooling plate (21), and the fourth port (L) being communicated with the first inlet (11) of the compressor (1).

23. A vehicle (200), comprising the thermal management system (100) according to any one of claims 1 to 22.
